(19)

**Europäisches Patentamt**
**European Patent Office**
**Office européen des brevets**

(11) **EP 4 560 529 A1**

(12) **EUROPEAN PATENT APPLICATION**
published in accordance with Art. 153(4) EPC

(43) Date of publication:
**28.05.2025 Bulletin 2025/22**

(21) Application number: **23841812.3**

(22) Date of filing: **07.04.2023**

(51) International Patent Classification (IPC):
**G06N 3/04** (2023.01)    **G06N 3/08** (2023.01)

(52) Cooperative Patent Classification (CPC):
**G06N 3/04; G06N 3/08**

(86) International application number:
**PCT/CN2023/087075**

(87) International publication number:
**WO 2024/016739 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.07.2022   CN 202210864203**

(71) Applicant: **Huawei Technologies Co., Ltd.
Shenzhen, Guangdong 518129 (CN)**

(72) Inventors:
• **SUN, Benyuan
  Shenzhen, Guangdong 518129 (CN)**

• **DAI, Jin
  Shenzhen, Guangdong 518129 (CN)**
• **LIANG, Zihao
  Shenzhen, Guangdong 518129 (CN)**
• **LIU, Congying
  Shenzhen, Guangdong 518129 (CN)**
• **YANG, Yi
  Shenzhen, Guangdong 518129 (CN)**
• **BAI, Bo
  Shenzhen, Guangdong 518129 (CN)**

(74) Representative: **Eisenführ Speiser
Patentanwälte Rechtsanwälte PartGmbB
Johannes-Brahms-Platz 1
20355 Hamburg (DE)**

(54) **METHOD FOR TRAINING NEURAL NETWORK MODEL, ELECTRONIC DEVICE, CLOUD, CLUSTER, AND MEDIUM**

(57)    This application relates to the field of artificial intelligence technologies, and in particular, to a neural network model training method, an electronic device, a cloud, a cluster, and a medium. The method includes: constructing a first neural network architecture, where the first neural network architecture includes M basic unit layers, each of the M basic unit layers includes a plurality of basic units, and the plurality of basic units include at least a first-type basic unit and a second-type basic unit; obtaining a target model through training based on datasets respectively corresponding to a plurality of tasks and the first neural network architecture, where the target model includes a plurality of task paths, at least some of the plurality of task paths include N basic units selected from some of the M basic unit layers, and N<M. In this solution, joint training of the plurality of tasks of the target model can be performed in parallel, to improve training efficiency and improve scalability, adaptability, and generalization of the trained model.

FIG. 4

EP 4 560 529 A1

**Description**

This application claims priority to Chinese Patent Application No. 202210864203.X, filed with the China National Intellectual Property Administration on July 20, 2022, and entitled "NEURAL NETWORK MODEL TRAINING METHOD, ELECTRONIC DEVICE, CLOUD, CLUSTER, AND MEDIUM", which is incorporated herein by reference in its entirety.

**TECHNICAL FIELD**

The present invention relates to the field of artificial intelligence (artificial intelligence, AI) technologies, and in particular, to a neural network model training method, an electronic device, a cloud, a cluster, and a medium.

**BACKGROUND**

Artificial intelligence is a branch of computer science that attempts to understand essence of intelligence and produce a new intelligent machine that can react in a way similar to human intelligence. The artificial intelligence is to study design principles and implementation methods of various intelligent machines, so that the machines have functions of perception, reasoning, and decision-making.

With the development of artificial intelligence technologies, trained neural network models gradually have various capabilities, and need to adapt to processing requirements of data of various modalities (modalities). In this case, a neural network model needs to be trained to learn a plurality of tasks, perform cross-modal learning of various types of data, and the like.

However, in most current neural network model training solutions, single-task and uni-modal data training is performed on various task processing that the neural network model needs to have, that is, learning of one task is performed at one time, and a dataset of only one modality is usually input during learning of tasks. Currently, there are some solutions dedicated to providing learning of a plurality of tasks or cross-modal learning of various types of data. However, scalability and adaptability of these solutions are poor, and joint training of a plurality of tasks, joint learning of cross-modal data, and joint learning of data features in a plurality of fields cannot be implemented.

**SUMMARY**

Embodiments of this application provide a neural network model training method, a cloud, a cluster, and a medium. Based on the method, joint training of a plurality of tasks can be implemented in parallel, and cross-modal learning can be supported in a training process, thereby improving efficiency of training a neural network model having a plurality of tasks. In addition, a neural network architecture constructed based on solutions of this application can support extension of a newly-added unit, thereby helping improve scalability and adaptability of a trained neural network model.

According to a first aspect, an embodiment of this application provides a neural network model training method. The method includes:

constructing a first neural network architecture, where the first neural network architecture includes M basic unit layers, each of the M basic unit layers includes a plurality of basic units, and the plurality of basic units includes at least a first-type basic unit and a second-type basic unit, where both the first-type basic unit and the second-type basic unit are configured to provide computing capabilities, the first-type basic unit has an adjustable computing parameter, the second-type basic unit has a trained historical computing parameter, and the second-type basic unit is obtained based on a trained historical model; and

obtaining a target model through training based on datasets respectively corresponding to a plurality of tasks and the first neural network architecture, where the target model includes a plurality of task paths, the plurality of task paths are in a one-to-one correspondence with the plurality of tasks, at least some of the plurality of task paths include N basic units, the N basic units are selected from some of the M basic unit layers, each of the N basic units corresponds to a different basic unit layer, and N<M.

In the foregoing solution, a neural network architecture with a specific structure and parameter, that is, the foregoing first neural network architecture, is first constructed. The neural network architecture includes a plurality of basic unit layers, and each basic unit layer has at least two types of basic units. The first-type basic unit may be, for example, a preset unit whose computing parameter can be adjusted. The second-type basic unit may be, for example, a historical unit having a trained historical computing parameter, and the historical computing parameter of the historical unit may be, for example, a fixed non-adjustable computing parameter. In this way, joint training of the plurality of tasks of the target model may be performed in parallel based on the neural network architecture and the dataset corresponding to each to-be-trained task of the target model, thereby improving training efficiency. In addition, there is an advantage that the task paths obtained by training the tasks may inherit corresponding trained historical computing parameters of some historical units. This helps improve training references of the task paths, to finally determine an optimal task path for convergence of the tasks of the target model, and complete a training process of the target model.

The foregoing computing parameter is a network parameter that determines an output result of corresponding calculation performed by each basic unit. For example, a computing parameter of the first-type basic unit, that is, a computing parameter of a preset unit, may control an output structure of the preset unit, and is adjusted or updated during training. For example, when an image recognition model is trained, a part of a to-be-recognized image needs to be recognized as a head or an arm, and a preset unit that provides a basic visual texture classification computing capability may be used to participate in training of an image recognition task. In a corresponding training process, the basic visual texture unit may calculate, based on obtained texture data and a preset probability parameter, a corresponding loss function value when the texture data belongs to the head or the arm, and continuously adjust the probability parameter to reduce a calculation result of the loss function, and finally obtain a group of network weight values through convergence and update the network weight values to trained computing parameters. Details are described in detail in the following specific implementations, and are not described herein again.

In a possible implementation of the first aspect, K basic unit layers of the M basic unit layers include a third-type basic unit, where $K \leq M$; and the third-type basic unit is configured to provide a computing capability for a newly-added task other than the plurality of tasks, and the third-type basic unit has an adjustable computing parameter.

In the neural network architecture constructed in the foregoing solution, that is, the first neural network architecture, after training of the target model is completed, the target model may be used as a pre-trained model, and a newly-added unit is added to continue to train the newly-added task. It may be understood that, the neural network architecture is a newly-added unit added to support training of the newly-added task, and can be adaptively added based on a type, complexity, a computing capability requirement, and the like that are of the newly-added task. In addition, in the foregoing process of training the target model, in correspondence with preset units and historical units that are configured for the tasks of the target model, the neural network architecture can also support different tasks, and select, based on a task characteristic of the neural network architecture, an adapted basic unit to perform a task operation. Based on this, the neural network model obtained through training by using the neural network model training method provided in embodiments of this application may have strong scalability and adaptability.

In a possible implementation of the first aspect, the obtaining a target model through training based on datasets respectively corresponding to a plurality of tasks and the first neural network architecture includes: training, in parallel based on the datasets respectively corresponding to the plurality of tasks, the task paths respectively corresponding to the plurality of tasks; adjusting, based on a training result, path parameters of task paths respectively corresponding to the plurality of tasks, where the path parameters include probability parameters respectively corresponding to the N basic units selected from the M basic unit layers, and a computing parameter of the first-type basic unit of the selected N basic units; and determining that the adjusted path parameters of the task paths respectively corresponding to the plurality of tasks meet a convergence condition, and completing training of the target model.

In the foregoing solution, that the plurality of tasks that need to be trained may be trained in parallel includes obtaining training data in the datasets corresponding to the tasks in parallel, and running the task paths corresponding to the tasks in parallel. The convergence condition may be, for example, a constraint condition that is set based on a function loss corresponding to each task. For example, a path parameter that meets the convergence condition, a probability parameter of selecting each basic unit on a corresponding task path, and a computing parameter of each basic unit all correspondingly meet the convergence condition. When a corresponding task path performs a corresponding task operation, a cross entropy loss and the like of a corresponding operation result reach a minimum value or are less than a preset value. For details, refer to related descriptions in the following specific implementations. Details are not described herein again.

In a possible implementation of the first aspect, the training, in parallel based on the datasets respectively corresponding to the plurality of tasks, the task paths respectively corresponding to the plurality of tasks includes: separately selecting, by using a plurality of processors, one task from the plurality of tasks, and obtaining training sample data corresponding to each selected task, where a process in which a first processor of the plurality of processors selects a first task of the plurality of tasks for training is related to a computing capability of the first processor and complexity of the first task, and the training sample data is sample data selected from the datasets respectively corresponding to the plurality of tasks; and training, in parallel by using the plurality of processors and based on the training sample data, task paths corresponding to selected tasks.

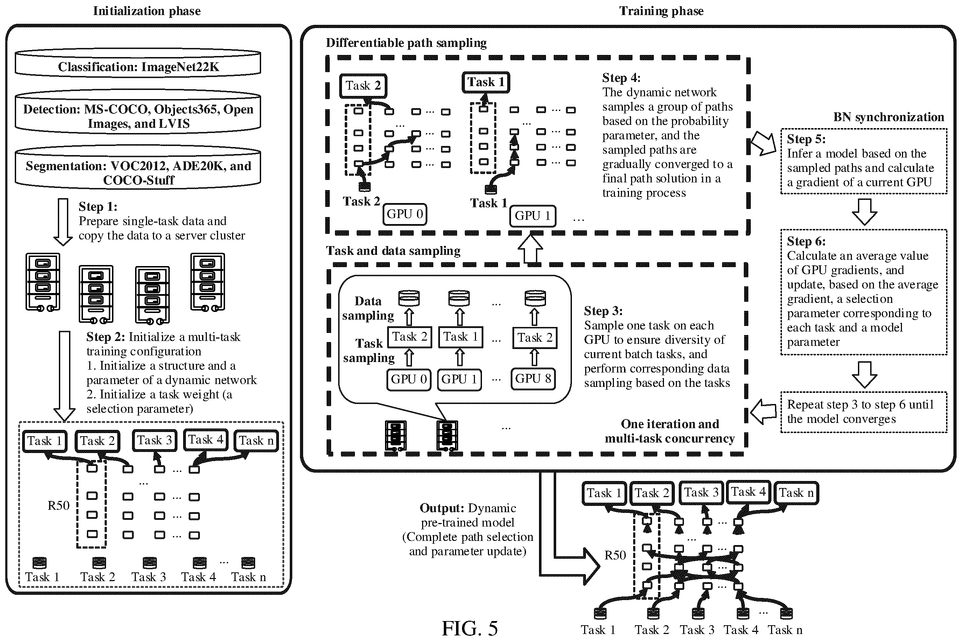

The plurality of processors are a plurality of training units on a model training device. The selecting one task from the plurality of tasks may correspond to a task sampling process in the following related descriptions in FIG. 5, and the sample data selected from the datasets respectively corresponding to the plurality of tasks may correspond to a data sampling process in the following related descriptions in FIG. 5. Therefore, in the foregoing solution, the plurality of training units on the model training device are used to separately sample different tasks and corresponding training data, to perform multi-task concurrent training. It may be understood that the plurality of processors may be, for example, GPUs, AI chips integrating a plurality of processors, or servers in a server cluster. This is not limited herein.

In a possible implementation of the first aspect, the constructing a first neural network architecture includes: constructing the first neural network architecture based on a configuration file, where the configuration file includes initial values of the path parameters respectively corresponding to the plurality of tasks, and the initial value of the path parameter includes an initial value of the probability parameter and an initialization computing parameter of the first-type basic unit.

The configuration file may be, for example, a structure configuration file described in the following specific implementations. The configuration file may be correspondingly generated based on a preset configuration file template and the plurality of tasks that need to be trained. For details, refer to related descriptions in the following specific implementations. Details are not described herein again.

In a possible implementation of the first aspect, the adjusting, based on a training result, path parameters of the task paths respectively corresponding to the plurality of tasks includes: adjusting the initial values of the path parameters of the task paths respectively corresponding to the plurality of tasks to training values by using a first loss function, where the first loss function includes a constraint determined based on an output result corresponding to each task path.

The first loss function described above may be determined corresponding to a type of each task being trained. For example, for training of a classification task, a cross entropy loss function may be used to calculate a loss of a corresponding task path. For training of a detection task, a mean square error loss function may be used to calculate a loss of a corresponding task path. This is not limited herein.

In a possible implementation of the first aspect, the adjusting the initial values of the path parameters of the task paths respectively corresponding to the plurality of tasks to training values by using a first loss function includes: calculating, by using the first loss function, gradients respectively corresponding to the plurality of processors, where the gradient indicates an adjustment direction of a corresponding path parameter on the corresponding processor; calculating an average value of the gradients respectively corresponding to the plurality of processors, to obtain a first average gradient; and adjusting, based on the first average gradient, the initial values of the path parameters respectively corresponding to the plurality of the tasks to the training values.

In the foregoing solution, the adjustment directions of the corresponding path parameters indicated by the gradients respectively corresponding to the plurality of processors may correspond to gradients that are obtained through calculation and that are of training units in the following specific implementations, for example, indicate update directions that are of path parameters and that are expected by sample data b in tasks t on training units. Further, it may be understood that the average gradient may indicate an average value of the update directions that are of the path parameters and that are expected by the task sample data on the training units. The foregoing solution is based on the average gradient, so that task path losses on the training units can be integrated, to implement balanced adjustment on related parameters of the task paths of the tasks that are being trained. This helps promote joint optimization of training data corresponding to the plurality of tasks.

In a possible implementation of the first aspect, the adjusting the initial values of the path parameters of the task paths respectively corresponding to the plurality of tasks to training values includes: adjusting the initial value of the probability parameter to a trained probability value; and adjusting the initialization computing parameter of the first-type basic unit to a trained computing parameter.

In a possible implementation of the first aspect, the training, in parallel by using the plurality of processors and based on the training sample data, task paths of selected tasks includes: determining, in parallel based on the initial values of the path parameters and by using the plurality of processors, initialization paths respectively corresponding to the plurality of tasks; and performing, based on the training sample data, at least one time of iterative training on the initialization path respectively corresponding to each task, where a first time of iterative training in the at least one time of iterative training includes: executing, by using the plurality of processors, the corresponding initialization paths to perform operations on input training sample data in parallel, to obtain initialization path output results respectively corresponding to the plurality of tasks.

In a possible implementation of the first aspect, a type of the plurality of tasks includes at least one of a classification task, a segmentation task, a detection task, a translation task, a recognition task, a generation task, or a regression task; and the datasets respectively corresponding to the plurality of tasks include a first dataset of a first type and a second dataset of a second type, and there is an association correspondence between all data in the first dataset and all data in the second dataset.

In a possible implementation of the first aspect, the adjusting, based on a training result, path parameters of the task paths respectively corresponding to the plurality of tasks includes: adjusting the initial values of the path parameters of the task paths respectively corresponding to the plurality of tasks to the training values by using the first loss function and a second loss function, where the second loss function includes a constraint determined based on the association correspondence.

The second loss function may be, for example, a comparison loss function corresponding to formula (3) in the following specific implementation. In some other embodiments, the second loss function may also be a loss function in another calculation form. This is not limited herein. In the foregoing solution, a function for calculating a loss corresponding to each task path and a function for calculating a comparison loss between different types of input data may be integrated, to fine-tune the path parameters corresponding to the trained tasks. In this way, the tasks can complete learning of different types of data in the training process, that is, cross-modal learning. For details, refer to related descriptions in the following specific implementations. Details are not described herein again.

In a possible implementation of the first aspect, the adjusting the initial values of the path parameters of the task paths respectively corresponding to the plurality of tasks to the training values by using the first loss function and a second loss function includes: calculating a similarity between all the data in the first dataset and all the data in the second dataset, to obtain a similarity matrix;

> calculating, based on the similarity matrix and by using the second loss function, a comparison loss between the first dataset and the second dataset, where the comparison loss includes a sum of loss function values corresponding to all data in the first dataset, and/or a sum of loss function values corresponding to all data in the second dataset;
> calculating, based on the comparison loss and by using the first loss function, gradients respectively corresponding to the plurality of processors, and calculating an average value of the gradients respectively corresponding to the plurality of processors, to obtain a second average gradient; and adjusting, based on the second average gradient, the initial values of the path parameters of the task paths respectively corresponding to the plurality of tasks to the training values.

The foregoing process of calculating, based on the comparison loss and by using the first loss function, the gradients respectively corresponding to the plurality of processors may be, for example, first adding the comparison loss obtained through calculation and a loss, obtained through calculation based on the first loss function, of a corresponding training task on each processor, and then using a loss that is obtained after the addition and that corresponds to each task to calculate a gradient on a corresponding training unit. In this way, in a training task process, a cross-modal comparison loss may be integrated to adjust a path parameter of the training task, to help synchronously train an operation capability like cross-modal data recognition or processing of a corresponding task.

In a possible implementation of the first aspect, after the obtaining a target model through training based on datasets respectively corresponding to a plurality of tasks and the first neural network architecture, the method further includes: determining, based on the task paths that respectively correspond to the plurality of trained tasks and that are in the target model, historical path parameters corresponding to the task paths; and training, based on the historical path parameter and an initialization computing parameter of the third-type basic unit and by using a dataset corresponding to the newly-added task, a newly-added path of the newly-added task, where the newly-added path includes the third-type basic unit.

In the foregoing solution, based on a trained neural network model (that is, the foregoing target model), a newly-added unit may be added to a correspondingly constructed neural network architecture to perform incremental learning, in other words, a newly-added task is trained. In this way, the trained model can be extended and optimized to adapt to more tasks, and scalability and adaptability of the trained model can be improved.

In a possible implementation of the first aspect, the plurality of trained tasks include at least one second task, and the training a newly-added path of the newly-added task by using a dataset corresponding to the newly-added task includes:

> separately selecting, by using the plurality of processors, one task from the newly-added task and the at least one second task, and obtaining training sample data corresponding to each selected task, where at least one processor that selects the newly-added task selects the training sample data from the dataset corresponding to the newly-added task, and a processor that selects the second task selects the training sample data from a dataset corresponding to the second task; and
> training, by the at least one processor that selects the newly-added task, the newly-added task in parallel based on the obtained training sample data, and executing, in parallel by the processor that selects the second task, a task path corresponding to the second task, to facilitate training of the newly-added task.

In a possible implementation of the first aspect, the training, by the at least one processor that selects the newly-added task, the newly-added task in parallel based on the obtained training sample data, and executing, in parallel by the processor that selects the second task, a trained task path corresponding to the second task, to facilitate training of the newly-added task includes:

> calculating, by using a first loss function, a first gradient respectively corresponding to the at least one processor that selects the newly-added task, and calculating a second gradient corresponding to the processor that selects the second task;
> calculating an average value of gradients based on the first gradient and the second gradient, to obtain a third average gradient; and
> adjusting, based on the third average gradient, a path parameter corresponding to the newly-added task to a training value.

In a possible implementation of the first aspect, the adjusting, based on the third average gradient, a path parameter corresponding to the newly-added task to a training value includes:

adjusting an initial value of the path parameter corresponding to the newly-added task to the training value, and iterating the training value of the path parameter corresponding to the newly-added task, where the adjusting an initial value of the path parameter corresponding to the newly-added task to the training value includes: adjusting an initial value of a probability parameter of each basic unit included in the newly-added path to the training value, and adjusting the initialization computing parameter of the third-type basic unit included in the newly-added path to a trained computing parameter.

According to a second aspect, an embodiment of this application provides a neural network model-based task operation method, including: obtaining a plurality of input tasks;

performing an operation on the plurality of input tasks based on a plurality of task paths in a neural network model, where at least some of the plurality of task paths include N basic units, the N basic units correspond to N basic unit layers of the neural network model, the neural network model includes M basic unit layers in total, and the N basic unit layers are parts of the M basic unit layers, where each of the M basic unit layers includes a plurality of basic units, and the plurality of basic units include at least a first-type basic unit and a second-type basic unit, both the first-type basic unit and the second-type basic unit are configured to provide computing capabilities, the first-type basic unit has an adjustable computing parameter, the second-type basic unit has a trained historical computing parameter, and the second-type basic unit is obtained based on a trained historical model; and
outputting a plurality of operation results, where the plurality of operation results are in a one-to-one correspondence with the plurality of input tasks.

In the foregoing solution, the neural network model obtained through training based on the neural network model training method provided in embodiments of this application may execute a plurality of input tasks in parallel, and output a plurality of operation results in parallel. Therefore, operation processing efficiency of performing a plurality of input tasks based on the neural network model is also high.

In a possible implementation of the second aspect, K basic unit layers of the M basic unit layers include a third-type basic unit, where K≤M, and the method includes: obtaining the plurality of input tasks and a newly-added input task; and performing an operation on the plurality of input tasks and the newly-added input task based on the plurality of task paths in the neural network model, where the plurality of task paths include a newly-added task path corresponding to the newly-added input task, the newly-added task path includes L third-type basic units, the L third-type basic units are selected from the K basic unit layers, and L≤K, where each of the L third-type basic units corresponds to a different basic unit layer, the third-type basic unit is configured to provide a computing capability for the newly-added input task, and the third-type basic unit has an adjustable computing parameter.

In a possible implementation of the second aspect, a process of adding the newly-added task path to the plurality of task paths includes: training a task path corresponding to at least one of the plurality of input tasks and the newly-added task path in parallel, to enable a neural network model obtained through training to include the newly-added task path, and the newly-added task path and task paths respectively corresponding to the plurality of input tasks jointly form the plurality of task paths.

In a possible implementation of the second aspect, a type of the plurality of input tasks includes at least one of a classification task, a segmentation task, a detection task, a translation task, a recognition task, a generation task, or a regression task.

According to a third aspect, an embodiment of this application provides an electronic device, including one or more processors and one or more memories. The one or more memories store one or more programs. When the one or more programs are executed by the one or more processors, the electronic device performs the neural network model training method provided in the first aspect, or the electronic device performs the neural network model-based task operation method provided in the second aspect.

According to a fourth aspect, an embodiment of this application provides a cloud server, including a communication interface and a processor coupled to the communication interface, where the processor is configured to: receive a plurality of tasks input by one or more terminals;

input the plurality of tasks into a neural network architecture to perform the neural network model training method provided in the first aspect, to obtain a target model through training; and send an obtaining parameter of the target model obtained through training to the one or more terminals, where the target model includes a plurality of task paths, and the plurality of task paths are in a one-to-one correspondence with the plurality of tasks.

According to a fifth aspect, an embodiment of this application provides a cloud server, including a communication interface and a processor coupled to the communication interface, where the processor is configured to receive a plurality of tasks input by one or more terminals;

input the plurality of tasks into a neural network model;
perform an operation on the plurality of input tasks in parallel based on a plurality of task paths in the neural network model, where at least some of the plurality of task paths include N basic units, the N basic units correspond to N basic unit layers of the neural network model, the neural network model includes M basic unit layers in total, and the N basic unit layers are parts of the M basic unit layers, where each of the M basic unit layers includes a plurality of basic units, and the plurality of basic units include at least a first-type basic unit and a second-type basic unit, both the first-type basic unit and the second-type basic unit are configured to provide computing capabilities, the first-type basic unit has an adjustable computing parameter, the second-type basic unit has a trained historical computing parameter, and the second-type basic unit is obtained based on a trained historical model; and

output a plurality of operation results in parallel, and send the plurality of operation results to the one or more terminals, where the plurality of operation results are in a one-to-one correspondence with the plurality of input tasks.

According to a sixth aspect, an embodiment of this application provides a computing device cluster, including at least one computing device, where each computing device includes a processor and a memory.

The processor of the at least one computing device is configured to execute instructions stored in the memory of the at least one computing device, so that the computing device cluster performs the neural network model training method provided in the first aspect, or performs the neural network model-based task operation method provided in the second aspect.

The computing device cluster may be, for example, a server cluster shown in the following specific implementations. This is not limited herein.

According to a seventh aspect, an embodiment of this application provides a computer-readable storage medium, and the storage medium stores instructions. When the instructions are executed on a terminal, a cloud server, a computing device cluster, or a processor, the terminal, the cloud server, the computing device cluster, or the processor performs the neural network model training method in the first aspect, or performs the neural network model-based task operation method in the second aspect.

According to an eighth aspect, an embodiment of this application provides a computer program product, including a computer program/instructions, where when the computer program/instructions is/are executed by a terminal, a cloud server, a computing device cluster, or a processor, the terminal, the cloud server, the computing device cluster, or the processor performs the neural network model training method provided in the first aspect, or performs the neural network model-based task operation method in the second aspect.

**BRIEF DESCRIPTION OF DRAWINGS**

FIG. 1a is a diagram of an existing multi-task learning framework;
FIG. 1b is a diagram of relationships between tasks in the existing multi-task learning framework;
FIG. 2 is a diagram of an application scenario of a neural network model training solution according to an embodiment of this application;
FIG. 3a is a diagram of a training procedure of a current single-task neural network model training solution;
FIG. 3b is a diagram of a training procedure of a neural network model training solution according to an embodiment of this application;
FIG. 4 is a diagram of a neural network architecture defined by a preset configuration file template according to an embodiment of this application;
FIG. 5 is a diagram of phases of a process of training a neural network model according to an embodiment of this application;
FIG. 6 is a schematic implementation flowchart of a neural network model training method according to Embodiment 1 of this application;
FIG. 7 is a diagram of a structure of a constructed dynamic network according to Embodiment 1 of this application;
FIG. 8 is a diagram of a process of adjusting path parameters respectively corresponding to tasks in a model training process according to Embodiment 1 of this application;
FIG. 9 is a diagram of an accuracy test result of performing corresponding data processing based on a task trained in a solution in this embodiment according to Embodiment 1 of this application;
FIG. 10 is a diagram of a scenario of fine-tuning and training a newly-added task based on a trained target model according to Embodiment 2 of this application;
FIG. 11 is a diagram of comparison between a training process in which no pre-trained model is used and a training process in which a pre-trained model is used according to Embodiment 2 of this application;
FIG. 12 is a schematic implementation flowchart of training the newly-added task based on the trained target model according to Embodiment 2 of this application;
FIG. 13a is a schematic diagram of comparison of corresponding error calculation results of the newly-added task obtained through training relative to a trained task when corresponding data is processed according to Embodiment 2 of this application;
FIG. 13b is a comparison table of accuracy test results corresponding to the newly-added task trained based on the solution in this embodiment and the trained task when different datasets are processed according to Embodiment 2 of this application;

FIG. 14 is a diagram of a scenario of training a plurality of existing tasks of a model to learn a new dataset according to Embodiment 3 of this application;

FIG. 15 is a schematic implementation flowchart of training a newly-added task based on a trained target model according to Embodiment 3 of this application;

FIG. 16 is a diagram of drawing an oblique parking spot as training data of a parking spot detection task based on a random image according to Embodiment 3 of this application;

FIG. 17 is an experimental data comparison table in which effect improvement is brought to an oblique parking spot detection accuracy rate of a model after a model task is fine-tuned and optimized by using artificial oblique parking spot data according to Embodiment 3 of this application;

FIG. 18 is a diagram of a dynamic selection process of a non-tree-shaped multi-task network;

FIG. 19 is a diagram of a process of obtaining a tree-shaped multi-task network by fine-tuning a target model obtained through training according to Embodiment 4 of this application;

FIG. 20 is a diagram of an application process of increasing explainability of basic units by using a knowledge graph in a target model training process according to Embodiment 5 of this application; and

FIG. 21 is a diagram of a structure of a model training device 100 according to an embodiment of this application.

## DESCRIPTION OF EMBODIMENTS

To make the objectives, technical solutions, and advantages of embodiments of this application clearer, the following describes in detail the technical solutions provided in embodiments of this application with reference to the accompanying drawings and specific implementations of this specification.

Some basic concepts in embodiments of this application are first described, to facilitate understanding by a person skilled in the art.

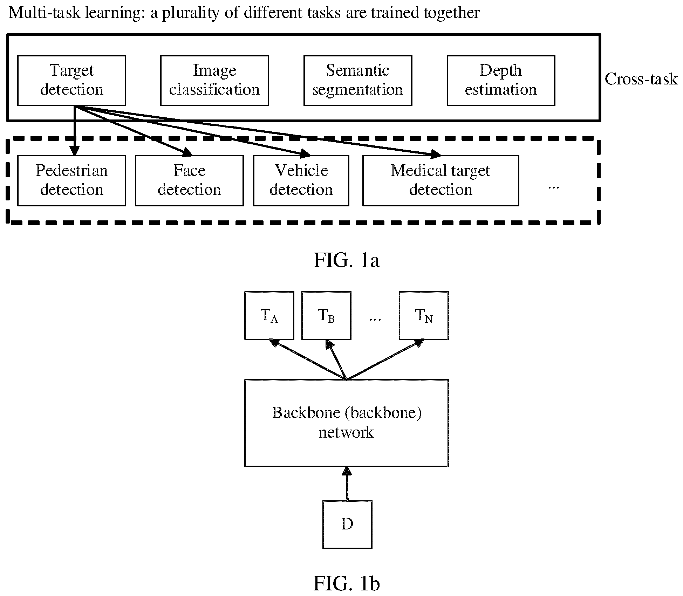

(1) Multi-task learning (Multi-task learning): Joint training of different deep learning tasks is performed and some parameters are shared. Refer to FIG. 1. For example, tasks such as target detection, image classification, semantic segmentation, and depth estimation are jointly trained. Therefore, the multi-task learning may also be referred to as multi-task joint training, cross-task learning, or the like.

(2) Multi-domain learning: Joint training of a plurality of datasets that have similar tasks is performed but different data distributions or data fields, and some parameters are shared. For example, joint training of tasks such as unmanned driving detection, medical image detection, and indoor home detection is performed.

(3) Cross-modal learning: Cross-modal data with specific matching is used as a dataset for training a model task, for example, an image and corresponding image description text data, and this type of dataset is used to enable a model to learn a feature correspondence between different modalities.

(4) Epoch (epoch): A dataset is trained exactly for one time. For example, if a dataset has 1 million pieces of data and 100 pieces of data are trained in each iteration, and 10,000 iterations are referred to as an epoch.

(5) Dynamic neural network (dynamic neural networks): It is referred to as a dynamic network, and is a neural network that dynamically adjusts a structure/parameter of the neural network when processing different sample data. According to dynamic adaptation objects, the dynamic network can be classified into three types: a sample adaptive dynamic network, a spatial adaptive dynamic network, and a time adaptive dynamic network.

(6) Sparse connectivity (sparse connectivity): It is also referred to as sparse interaction (sparse interactions) or a sparse weight (sparse weights). There is a relationship between layers in neural networks that are in sparse connectivity, but layer-by-layer unidirectional connectivity is not emphasized. The sparse connectivity can imitate a locality-sensitive feature of a visual nerve and establish a connection between adjacent neurons, but only some network layers may respond to and process tasks. Compared with that of full connectivity, connections of units at each layer are sparse, and therefore is referred to as sparse connectivity.

(7) Configuration file (configuration file): In the field of computer science, a configuration file is a computer file, and may configure parameters and initial settings for some computer programs. The computer program may be, for example, model training software used to train a neural network model.

FIG. 1a shows a diagram of an existing multi-task learning framework.

Refer to FIG. 1a. A neural network model used in an unmanned driving technology or a medical detection technology needs to have the following tasks: target detection, image classification, semantic segmentation, depth estimation, and the like. Content of a target detection task executed by using the neural network model in the unmanned driving technology may include pedestrian detection, face detection, vehicle detection, and the like. In addition to the foregoing task content, content of a target detection task executed by using the neural network model in the medical detection technology may further include medical target detection and the like. Therefore, a neural network model usually needs to have a plurality of task processing capabilities.

FIG. 1b shows a diagram of relationships between tasks in the existing multi-task learning framework.

It may be understood based on FIG. 1a that multi-task learning is to enable one neural network model to learn a plurality of task processing capabilities. Refer to FIG. 1b. In a multi-task learning process, on one hand, similar tasks (for example, tasks $T_A$, $T_B$, ..., and $T_N$ shown in FIG. 1b) may promote each other, to improve precision of each other. On the other hand, a plurality of tasks share most of a computing amount, for example, share a computing amount of a backbone (backbone) shown in FIG. 1b, instead of performing isolated training by using different neural networks for the tasks. Therefore, multi-task learning can help reduce a computing amount in a training and application process of each task.

However, most current multi-task learning frameworks are a type of framework that can receive only one input training dataset to train a plurality of tasks for output as shown in FIG. 1b, and cannot support each task in separately using a specific dataset of the task. Therefore, training effect and a limitation are large.

To resolve this problem, a solution is proposed to construct a neural network architecture with a plurality of neural network unit layers, and perform joint training of a plurality of tasks based on a plurality of neural network units at each layer. In this solution, in a training process, each task may select one neural network unit from each neural network unit layer of the neural network architecture, and form a task path to learn input training data corresponding to a corresponding task. Finally, a task output corresponding to each task is obtained through training based on the neural network architecture.

However, joint training of a plurality of tasks cannot be implemented in parallel based only on this simple neural network architecture. For example, tasks can still be trained only in batches. For example, a task 1 is trained first, a task 2 is trained, then a task 3 is trained, ...., and a plurality of tasks cannot be trained concurrently and training efficiency is low. In addition, training processes of the task in this solution are still independent, and optimization effect of joint training is still poor.

It should be noted herein that in descriptions of this application, a relationship between the neural network model and the neural network architecture is as follows: The neural network model includes a model trained based on the neural network architecture. In embodiments of this application, a trained neural network model or a target model is a model trained based on the neural network architecture provided in this application.

In addition, currently, connections between neural network layers in most neural network architectures used to perform joint training of a plurality of tasks are close, and each task can only sequentially select, from each neural network layer, a neural network unit on a task path. As a result, flexibility of multi-task learning is poor, and after some tasks are trained, some repeated or useless neural network units exist on corresponding task paths. In this case, a computing amount during task training and actual data processing is increased.

In addition, data input into a trained neural network model for processing may include various modalities. For example, data input into a natural language processing (natural language processing, NLP) model may include modalities such as a text, an image, a video, and the like. Therefore, the neural network model further needs to have a capability of recognizing various types of cross-modal data for processing.

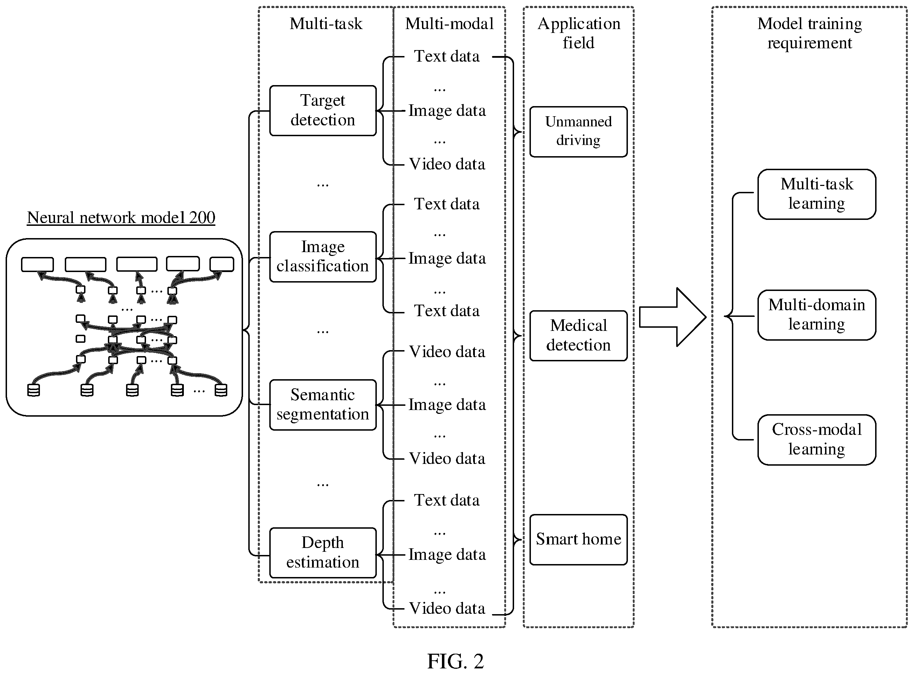

FIG. 2 is a diagram of an application scenario of a neural network model training solution according to an embodiment of this application.

As shown in FIG. 2, the scenario includes a neural network model 200 that needs to be trained. The neural network model 200 may be used in fields such as unmanned driving, medical detection, and smart home, and corresponding processing tasks need to be executed based on data characteristics in these fields, and the like. Based on a specific service or device requirement, the neural network model 200 that needs to be trained usually needs to perform a plurality of processing tasks. For example, the tasks that need to be processed may include target detection, image classification, semantic segmentation, depth estimation, and the like. In addition, when performing processing tasks, the neural network model 200 that needs to be trained further needs to adapt to input data of a plurality of modalities. For example, the neural network model 200 may accurately recognize the input data of each modality by learning an association relationship between data of each modality.

Refer to FIG. 2. Currently, based on a plurality of tasks that need to be trained, the neural network model 200 not only needs to be capable of executing the plurality of tasks, but also needs to be capable of recognizing various types of cross-modal data, and further needs to have professional data processing capabilities in different application fields. As a result, a training amount in a training process of the neural network model 200 is huge. It can be learned that, it may take long time and consume a large amount of energy to obtain the neural network model 200 shown in FIG. 2 through training by using a current single-task and uni-modal training solution and the current multi-task learning framework. In addition, a current neural network model training solution can be customized only based on a capability requirement of a to-be-trained model, and generally cannot be extended to support training of another model. In other words, scalability of the current training solution is poor.

In other words, the current neural network model training solution cannot support joint training of a plurality of tasks, joint learning of cross-modal data, or joint learning of data features in a plurality of fields, and scalability and adaptability of the solution are poor.

To resolve the foregoing technical problem, the present invention provides a neural network model training method. Specifically, in the method, a structure configuration file used to construct a target neural network is generated based on a task set including to-be-trained tasks in a target model and a preset configuration file template used for definition. A defined neural network architecture includes a plurality of basic unit layers, and each basic unit layer includes at least two types of basic units. One type of basic unit may be, for example, a preset unit whose computing parameter can be adjusted, and the other type of basic unit may be, for example, a historical unit whose computing parameter cannot be adjusted. In this way, the neural network architecture that is constructed based on the generated structure configuration file and that meets the foregoing definition may train a plurality of tasks of the target model in parallel, and finally obtain a corresponding task path through convergence for the tasks. Each task path includes a plurality of basic units selected from the basic unit layers one by one in the foregoing neural network architecture, and each task path may correspondingly select a basic unit from all or some basic unit layers in the neural network architecture.

The foregoing the structure configuration file generated based on the configuration file template may be a format file that can be recognized by corresponding model training software. The foregoing process of generating the structure configuration file may be, for example, writing, into the structure configuration file in a form required by the format file, structure parameters such as a basic network structure, a basic network parameter, a task network structure, a task network parameter, and a dynamic network parameter of a neural network that needs to be constructed, and an obtaining path of a basic unit used to construct the basic network structure.

In this way, when running corresponding model training software to train the target model, a model training device, for example, a server cluster may read the foregoing structure parameters and the obtaining path of the basic unit in the corresponding structure configuration file, obtain basic units related to tasks in the task set, and construct a neural network that meets a requirement of the structure parameter in the configuration file. For example, a basic structure of the neural network that needs to be constructed may be determined based on the basic network structure and the basic network parameter, including a depth (for example, a quantity of layers) and a width (for example, a quantity of basic units at each layer) of the neural network. A structure of a basic unit at each layer of a basic single-task network used to construct a required neural network and a replication multiple of the basic single-task network may be determined based on the dynamic network parameter. Basic units, including a preset unit in a basic unit library, a basic unit in a historical model, and the like having the structure determined based on the foregoing dynamic network parameter may be correspondingly obtained based on the obtaining path of the basic unit. Further, a path prediction module and a data preprocessing module that correspond to each task may be created in the constructed neural network based on the task network structure and the task network parameter. The data preprocessing module may preprocess data in a dataset related to each task, and then input the preprocessed data into the constructed neural network for training. The path prediction module is configured to obtain, during training through convergence and inferring, an optimal path corresponding to each task and a computing parameter of a basic unit participating in each path.

In this case, after each task in the target model is trained, the trained target model may be obtained.

It may be understood that the configuration file template used to define the neural network architecture is a format file template that can generate a corresponding structure configuration file of the neural network based on different task sets, and is used to match and create a neural network suitable for training each task in the task set. After the task set that needs to be trained is determined, the model training software may obtain a type of each task, a related parameter of a corresponding dataset, and a related parameter of a corresponding training rule that are written into the task set by the configuration file template and further match a structure parameter of a to-be-created neural network, and generate a structure configuration file of the neural network suitable for training the task set. It may be understood that a format type of the configuration file may be, for example, yaml or json, and the model training software may be, for example, MindSpore, PyTorch, TensorFlow, or JAX. The computing parameter of each basic unit in the neural network constructed based on the structure configuration file may be dynamically adjusted during training, and a related parameter that is used to construct a path and that is of a basic unit selected by each to-be-trained task from the constructed neural network may also be dynamically adjusted. The foregoing constructed neural network is a dynamic neural network, and for ease of description, the dynamic neural network may be referred to as a dynamic network for short in the following.

It may be understood that, if datasets corresponding to the tasks in the foregoing task set have different modalities, that is, data types in the datasets are different, for example, some datasets are sets of text data, and some datasets are sets of image data, the target model obtained by inputting the foregoing dynamic network for training may have a capability of processing different modal data.

It may be understood that types of the plurality of to-be-trained tasks in the task set may include but are not limited to a classification task, a segmentation task, a detection task, a translation task, a recognition task, a generation task, a regression task, or the like. This is not limited herein.

In addition, after a neural network model is trained based on the foregoing solution, if incremental learning needs to be performed based on the trained model to train a newly-added task, a newly-added unit may be added to the neural network architecture constructed based on the structure configuration file, and one or more tasks may be selected from the trained tasks for parallel training with the newly-added unit. In this way, the newly-added task of incremental learning can learn a complete data feature, thereby improving generalization of a model in which the newly-added task is trained.

It may be understood that the basic unit of each layer of the neural network created based on the generated structure configuration file may be a computing unit including at least one neural network layer. A neural network layer included in each basic unit may be a convolutional layer, a pooling layer, a full basic unit layer (FC), a normalization layer (BN), an excitation layer, or the like. This is not limited herein.

It may be understood that, as described above, when the neural network model is trained based on the solution provided in embodiments of this application, the basic unit having the structure determined based on the foregoing dynamic network parameter may be obtained, including obtaining the preset unit in the basic unit library, obtaining the basic unit in the historical model, and the like. In other words, the basic unit used to construct the target model neural network may come from the historical model. The historical model is, for example, a trained neural network model that has a capability of processing a plurality of types of modal data. In other words, source parameters of some basic units in the structure parameters provided by the corresponding generated structure configuration file may include obtaining paths or invoking parameters of related basic units in some historical models.

Therefore, according to the foregoing target model training method provided in embodiments of this application, joint training of a plurality of tasks and cross-modal joint training can be implemented, training of a plurality of tasks in a task set can be completed at once, and cross-modal training can be implemented, so that the target model obtained through training has a capability of processing cross-modal data.

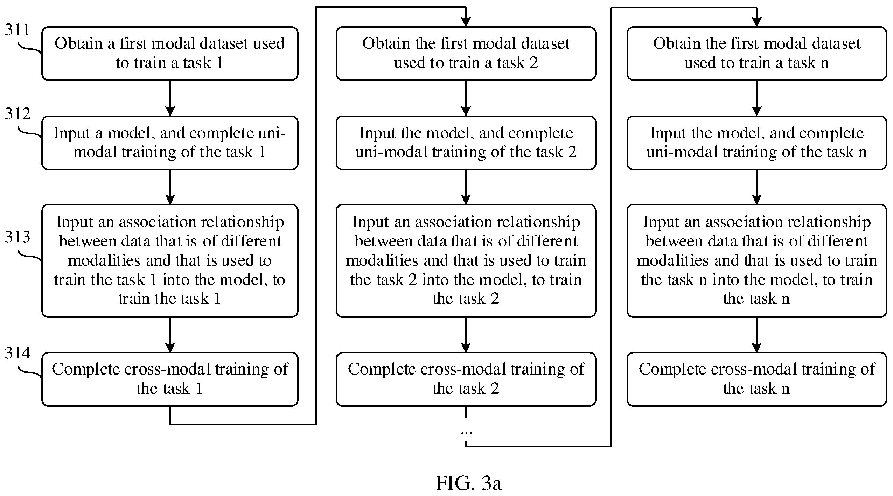

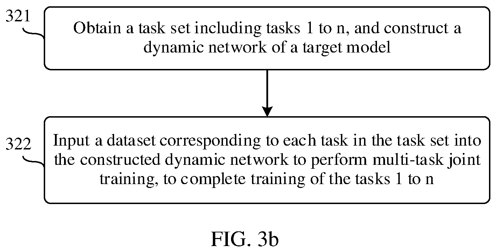

As an example, FIG. 3a and FIG. 3b show diagrams of training procedures of two neural network model training solutions.

For comparison, FIG. 3a is a diagram of a training procedure of a current single-task neural network model training solution.

For example, a to-be-trained target model includes n to-be-trained tasks, and each task needs to support processing data of different modalities. As shown in FIG. 3a, a process of training each task of the target model in the procedure may include the following steps.

311: Obtain a first modal dataset used to train a task 1.

312: Input a model, and complete uni-modal training of the task 1.

313: Input an association relationship between data that is of different modalities and that is used to train the task 1 into the model, to train the task 1.

314: Complete cross-modal training of the task 1.

The process of step 311 to step 314 is repeated until all training processes of n tasks of the target model are completed.

FIG. 3b is a diagram of a training procedure of a neural network model training solution according to an embodiment of this application.

As shown in FIG. 3b, for a target model that also includes n to-be-trained tasks and in which each task needs to support processing data of different modalities, the training procedure of the neural network model training solution provided in embodiments of this application may include only the following two steps.

321: Obtain a task set including tasks 1 to n, and construct a dynamic network of a target model. The obtained task set may include datasets of a plurality of modalities, and each task may correspond to a specific dataset.

322: Input a dataset corresponding to each task in the task set into the constructed dynamic network to perform multi-task joint training, to complete training of the tasks 1 to n.

The procedures shown in FIG. 3a and FIG. 3b are compared. It can be learned that the neural network model training solution provided in embodiments of this application can support joint training of data of a plurality of modal types, a plurality of fields to which the model is applied, and a plurality of tasks, so that training efficiency is high. Joint training can facilitate training data optimization of each task. Therefore, a task processing capability of the neural network model obtained through training based on this application is also optimized. In addition, in the neural network model training solution provided in embodiments of this application, a corresponding task set and a corresponding basic unit may be customized based on an application field of the to-be-trained target model and a requirement of a task type, so that scalability and adaptability are good.

It may be understood that connections between basic units in the constructed dynamic network may be in sparse connectivity. Further, when the dynamic network selects, for each task, basic units to form a task path, basic units may be selected layer by layer or selected by skipping a layer based on a training requirement of a corresponding task. This helps improve scalability and adaptability of a predefined neural network architecture, and further improve scalability and adaptability of the neural network model training solution provided in embodiments of this application.

The basic unit determined based on the task network structure and the task network parameter that correspond to each task may be a preset unit set for a corresponding task, a historical unit provided by a trained historical model, a newly-added unit added for a newly-added task, or the like. The optimal path prediction module corresponding to each task may be a path selector disposed at each layer of the dynamic network. Details are described in the following in detail, and are not described herein again.

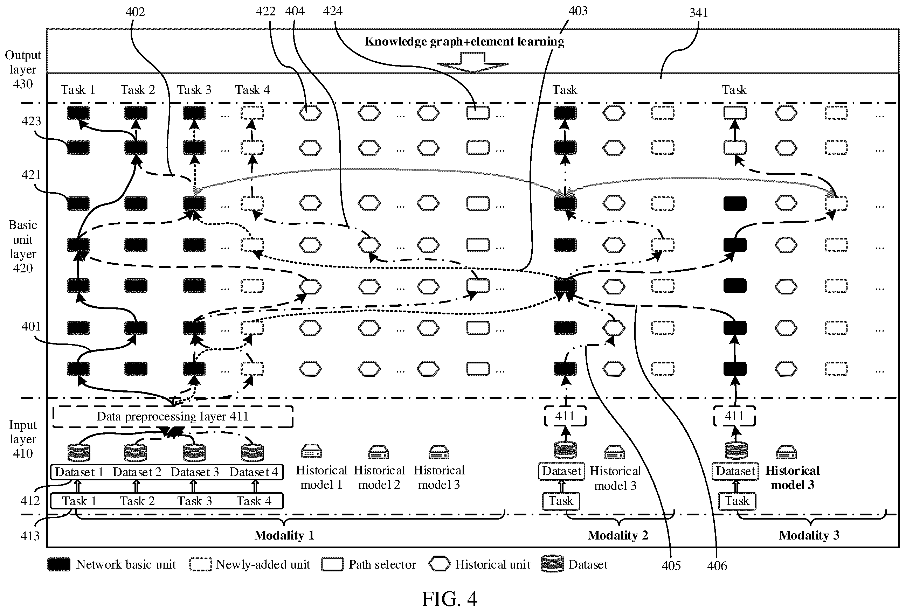

FIG. 4 is a diagram of a neural network architecture defined by a preset configuration file template according to an embodiment of this application.

It may be understood that an embodiment of this application provides a predefined neural network architecture 400, used to construct a dynamic network during neural network model training, so that a required neural network model can be trained based on the constructed dynamic network.

As shown in FIG. 4, the neural network architecture 400 includes an input layer 410, a basic unit layer 420, and an output layer 430.

The input layer 410 includes data preprocessing layers 411 and task sets 412. The data preprocessing layer 411 is used to preprocess data that is of different modalities and that is input into a model. The task set 412 may include a set of all joint training tasks, and each task in the task set 412 has a specific dataset 413.

The basic unit layer 420 includes network basic units such as preset units 421, historical units 422, and newly-added units 423, and path selectors 424. As described above, these basic units are computing units including a plurality of neural network layers. In some other embodiments, the basic unit is also referred to as a model operator, and is used to execute various types of probability parameters and the like when tasks are performed to process sampled data in a training process. It may be understood that the basic unit is in a form of a <network structure, parameter> pair, and a specific form may be a convolutional layer, a combination of a plurality of convolutional layers, a combination of a convolutional layer and another network layer like a pooling layer, an attention mechanism calculation module, or the like. This is not limited herein.

The preset units 421 are some basic units that correspond to the neural network architecture 400 and that are preset to perform general computing. A corresponding basic unit neural network parameter may be pre-trained on the preset unit 421, for example, a basic visual texture classification operator used in an image recognition model, which may be used to process general image recognition computing when being used as the preset unit 421. Alternatively, the preset unit may learn a data feature of a modal type in advance, and form a corresponding classification weight parameter or the like as an initialized computation parameter.

It may be understood that a computation parameter of the preset unit 421 is an undetermined part of the preset unit 421. The computation parameter may control an output structure of the preset unit, and is updated during training. For example, when the image recognition model is trained, a part in a to-be-recognized image needs to be recognized as a head or an arm, and the preset unit 421 that provides a basic visual texture classification computation capability may be used to participate in task training. In a training process, the basic visual texture unit may calculate, based on obtained texture data and a preset probability parameter, a corresponding loss function value when the texture data belongs to the head or the arm, and continuously adjust the probability parameter to reduce a calculation result of the loss function, and a weight finally obtained through convergence is a trained computation parameter of the preset unit.

It may be understood that in a process of defining a model structure and training a neural network model based on the neural network architecture 400 shown in FIG. 4, knowledge provided by some basic units may be repeatedly used. Therefore, the preset unit 421 may be single-input single-output, or may be multiple-input multiple-output. In addition, different preset units 421 at the basic unit layer 420 may provide same or different knowledge, and in a process of training the neural network, computation parameters adjusted and determined by the preset units 421 that provide same knowledge are also different from each other.

In some embodiments, the basic unit layer 420 further includes basic units used by some trained historical models, namely, the historical units 422. It may be understood that, in the process of defining the model structure and training the neural network model based on the neural network architecture shown in FIG. 4, the historical units 422 used in the historical model may be reused. A network structure and a parameter of the historical unit 422 used in the neural network architecture 400 are fixed in a training process of the historical model, and are not updated when the neural network architecture 400 participates in training of some tasks.

In addition, based on the preset unit 421 and the historical unit 422, when incremental learning needs to be performed on a trained neural network model, some basic units may be dynamically added to the neural network architecture 400 corresponding to the neural network model to train a newly-added task. Refer to the newly-added unit 423 shown in FIG. 4, these newly-added units that are dynamically added are used as task path candidate units of newly-added tasks in a training process of training the newly-added tasks. In this way, the neural network architecture 400 can have stronger scalability and adaptability, and can meet training requirements of a plurality of newly-added tasks.

It may be understood that the newly-added unit 423 usually appears only in incremental learning, and is mainly used to dynamically extend a task processing capability of a trained neural network model. For example, 100 tasks are trained in a trained neural network model that is based on the solution of this application, and cross-modal learning of data of three modal types is completed.

When data of one modal type needs to support training of a newly-added task, if retraining is performed on 101 tasks including the newly-added task and learning of the data of the three modal types is performed, a large amount of time is consumed. Therefore, in this solution, locations are reserved at each basic unit layer of the neural network architecture for adding the newly-added units 423, so that the newly-added units 423 are properly added for the newly-added task based on the neural network model in which the 100 tasks are trained and the data of the three modal types is learned by corresponding tasks, and then these newly-added units 423 may be used to participate in training of the newly-added task together with other basic units. A quantity of the newly-added units 423 may be adjusted based on a training convergence status of the newly-added task. For example, when a convergence loss of the newly-added task is low, a small quantity of newly-added units 423 may be added; otherwise, a large quantity of newly-added units may be added.

The path selector 424 is used to learn which basic unit 421 in the network structure of the layer should be selected for a task that needs to be trained. It may be understood that there is one path selector 424 in each network structure of the basic unit layer 420, to select a basic unit 421 that matches a corresponding task during training of each task. A specific process in which the path selector 424 selects the basic unit for the corresponding task is described in detail in the following. Details are not described herein again.

It may be understood that the basic unit selected, based on the path selector 424, for training the corresponding task, includes any one of the preset unit 421, the historical unit 422, and the newly-added unit 423. Further, a basic unit path used to train the corresponding task may be formed based on the basic unit selected by the network at each layer. Therefore, in this application, a process of jointly training a plurality of tasks of the neural network model and training each task to learn data of a plurality of modalities can be implemented. For basic unit paths corresponding to different tasks, refer to a path 401 to a path 406 shown in FIG. 4.

The output layer 430 may output a task module trained based on each basic unit path. The neural network model obtained through training may have a corresponding task processing or execution capability based on the trained task module.

It can be learned from the path 401 to the path 406 shown in FIG. 4 that, in the neural network architecture 400 in the solutions of this application, when different tasks of the neural network model are trained, basic units 421 or historical units 422 corresponding to data of different modalities may be selected, to establish corresponding basic unit paths for training corresponding tasks. In this way, in the solutions of this application, joint training of a plurality of tasks can be implemented, and a capability of processing corresponding task data across modalities by a model can be simultaneously trained. In addition, datasets 412 corresponding to tasks provided in the solutions of this application may be datasets in different application fields. Therefore, application field isolation between datasets can be further eliminated in the solutions of this application, for example, datasets in different application fields may be selected for different to-be-trained tasks during one time of training, thereby implementing joint training across application fields.

According to the predefined neural network architecture 400 shown in FIG. 4, the neural network model training method provided in embodiments of this application may be further implemented, to train various neural network models. It may be understood that the neural network architecture 400 shown in FIG. 4 is a general deep network model training framework provided in embodiments of this application, and may be used to train neural network models required in various application scenarios, for example, a target detection model and a depth estimation model in an autonomous driving scenario, a semantic segmentation model and an object detection network model in a 3D visual scenario, a photo refinement model in a terminal album scenario, and an anomaly detection model in smart home. This is not limited herein.

It may be understood that the neural network model training method shown in embodiments of this application is applicable to an electronic device, and the electronic device may include but is not limited to a mobile phone, a tablet computer, a desktop type, a laptop type, a handheld computer, a netbook, a server, a server cluster, and another electronic device in which one or more processors are embedded or coupled. To make the description clearer, in the following, an electronic device that performs model training by using the neural network model training method provided in embodiments of this application is referred to as a model training device.

FIG. 5 is a diagram of phases of a process of training a neural network model according to an embodiment of this application.

As shown in FIG. 5, the process of training the neural network model includes two phases: an initialization phase and a training phase.

The initialization phase includes step 1 and step 2 shown in FIG. 5.

Step 1: Prepare single-task data and copy the data to a server cluster.

Step 2: Initialize a structure and a parameter of a dynamic network, and initialize a task weight (a probability parameter).

It may be understood that a detailed implementation process of each step in the initialization phase is described in the following in detail with reference to an implementation flowchart 6. Details are not described herein again.

The training phase includes step 3 to step 7 shown in FIG. 5.

Step 3: Sample one task on each GPU to ensure diversity of current batch tasks, and perform corresponding data sampling based on the tasks.

Step 4: The dynamic network samples a group of paths based on the probability parameter, and the sampled paths are gradually converged to a final path solution in a training process.

Step 5: Execute corresponding content, that is, infer a model based on the sampled paths and calculate a gradient of a current GPU.

Step 6: Calculate an average value of GPU gradients, and update, based on the average gradient, a probability parameter corresponding to each task and a model parameter.

It may be understood that a detailed implementation process of each step in the training phase is described in the following in detail with reference to the implementation flowchart 6. Details are not described herein again.

With reference to specific embodiments, the following further describes a specific implementation process of the neural network model training method provided in embodiments of this application.

The following first describes, with reference to Embodiment 1, a specific implementation process of jointly training a plurality of tasks based on the neural network model training method provided in embodiments of this application.

**Embodiment 1**

In this embodiment of this application, when joint training of a plurality of tasks needs to be performed, one neural network model (namely, a target model) may be trained for implementation. For example, three types of tasks need to be trained in the to-be-trained target model, for example, a classification task, a detection task, and a segmentation task. Each type of task may include one or more to-be-trained tasks. Joint training of the three types of tasks may be performed based on the neural network model training method provided in embodiments of this application. It may be understood that, in another embodiment, the solution provided in embodiments of this application may also be applicable to joint training of another task type different from the foregoing three types of tasks. This is not limited herein.

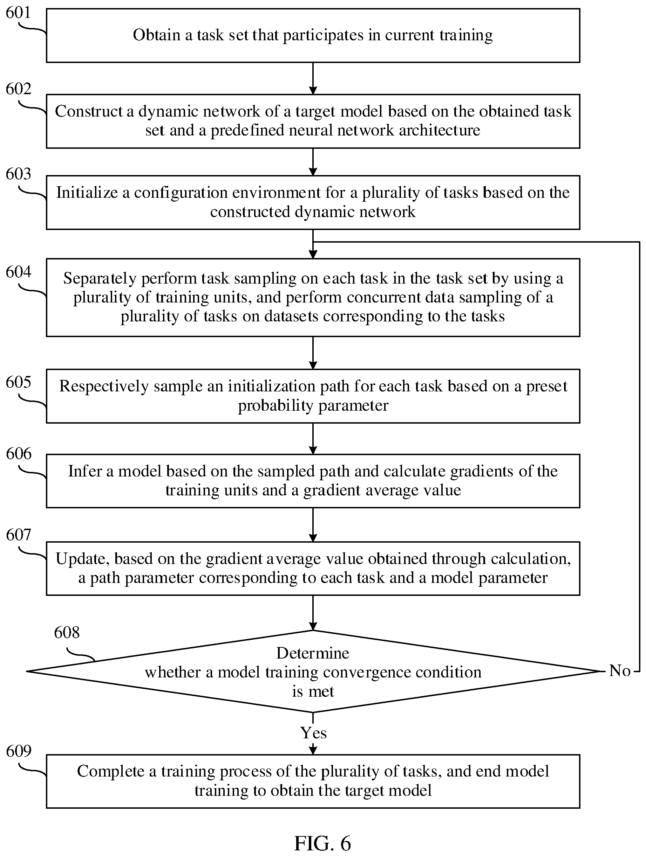

FIG. 6 is a schematic implementation flowchart of a neural network model training method according to an embodiment of this application.

It may be understood that steps in a procedure shown in FIG. 6 may be performed by an electronic device configured to train a neural network model, that is, a model training device, for example, a server or a server cluster. For ease of description, when content of each step is described in the following, an execution body of each step is not repeatedly described.

As shown in FIG. 6, the procedure includes the following steps.

601: Obtain a task set that participates in current training.

For example, before a target model is trained, a task set used in target model training may be obtained or added based on a predefined neural network architecture. Refer to the neural network architecture 400 shown in FIG. 4, the selected task set may include a plurality of tasks used in the target model and datasets corresponding to the tasks. In other words, when a task set is selected, a dataset corresponding to each task may be determined. Data modalities provided by the datasets may be different. For example, some datasets may provide text data, some datasets may provide image data, and some datasets may provide video data. This is not limited herein.

It may be understood that data provided by the datasets corresponding to the tasks is usually single-task data, that is, sample data corresponding to a corresponding single task. The server cluster is an execution body for implementing the neural network training method provided in embodiments of this application. The datasets that provide the single-task data corresponding to the tasks may include: a classification dataset ImageNet22K, detection datasets MS-COCO, Objects365, Open Images, and LVIS, segmentation datasets VOC2012, ADE20K, and COCO-Stuff, and the like. This is not limited herein.

For example, there are eight to-be-trained tasks, including one classification task: ImageNet21k, two detection and segmentation tasks: COCO and LVIS, two detection tasks: Open Images and Objects365, and three segmentation tasks: ADE20K, COCO-Stuff, and Pascal-VOC 2012. When joint training of these tasks is performed in parallel, a dataset that needs to be used may be selected corresponding to each task, for example, the classification dataset ImageNet21k, the detection dataset COCO, and the segmentation dataset LVIS. Datasets of tasks of a same type may be the same, each dataset includes a plurality of pieces of sample data, and each piece of sample data may be, for example, one (image, label) pair. The dataset selected for each to-be-trained task and the eight tasks may form a task set participating in the current training.

In a specific training operation, after the task set participating in the current training is obtained, the classification datasets, the detection datasets, and the segmentation datasets that separately corresponds to the foregoing eight tasks in the task set may be copied to the server cluster. Because training difficulties of the eight tasks are high, the server cluster used as the model training device may include, for example, 10 servers, and each server may include, for example, eight Ascend (Ascend) AI chips. A communication network may be created between the servers, for example, by using a TCP communication protocol, to implement communication between the servers. In some other embodiments, the model training device configured to jointly train a plurality of tasks may alternatively be an electronic device with another configuration. This is not limited herein.

It may be understood that the selecting the task set to participate in the current training in step 601 correspondingly includes content corresponding to step 1 shown in FIG. 5, that is, preparing the single-task data and copying the data to the server cluster.

602: Construct a dynamic network of the target model based on the obtained task set and the predefined neural network architecture.

For example, after obtaining the task set, the server cluster may construct the dynamic network of the target model by using the predefined neural network architecture. Specifically, model training software running in the server cluster may input, based on a configuration file template that defines the neural network architecture, related parameters of the to-be-trained tasks in the task set, for example, a task type, a task rule, and a task purpose, to generate a corresponding structure configuration file. Further, the dynamic network structure of the target model is constructed based on a basic network structure and a basic network parameter in the structure configuration file. Corresponding to the structure configuration file generated based on the obtained task set, related parameters used to construct the dynamic network of the target model may be provided, including structure parameters such as the basic network structure, the basic network parameter, a task network structure, a task network parameter, and a dynamic network parameter, an obtaining path of a basic unit used to construct the basic network structure, and the like. A process of constructing the dynamic network based on the structure configuration file includes: determining a basic structure of the neural network that needs to be constructed based on the basic network structure and the basic network parameter, including a depth (for example, a quantity of layers) and a width (for example, a quantity of basic units at each layer) of the neural network; determining a structure of a basic unit at each layer of a basic single-task network used to construct a required neural network and a replication multiple of the basic single-task network based on the dynamic network parameter. Basic units, including a preset unit in a basic unit library, a basic unit in a historical model, and the like having the structure determined based on the foregoing dynamic network parameter may be correspondingly obtained based on the obtaining path of the basic unit.

Refer to FIG. 4. The constructed dynamic network may include the input layer 410, the basic unit layer 420, and the output layer 430 shown in FIG. 4. Basic units at each layer of the basic unit layer 420 may be a basic unit matrix obtained by replicating the preset units 421, or may include a composite basic unit matrix formed by the historical units 422 replicated from the trained historical model and the preset units 421. The basic unit matrix may further include the newly-added unit 423. This is not limited herein. Specifically, for a structure and a function of each layer of the constructed dynamic network, refer to related descriptions in FIG. 4. Details are not described herein again.

After the basic structure of the dynamic network is constructed, the model training device may create, in the constructed neural network based on the task network structure and the task network parameter in the structure configuration file, a path prediction module and a data preprocessing module that correspond to each task. The path prediction module may be, for example, a path selector created in the dynamic network. For details, refer to related descriptions in step 603 in the following. Details are not described herein again. The data preprocessing module may preprocess data in a dataset related to each task, and then input the preprocessed data into the constructed neural network for training. For details, refer to related descriptions of the data preprocessing layer 411 in the foregoing related descriptions of the neural network architecture in FIG. 4. Details are not described herein again.

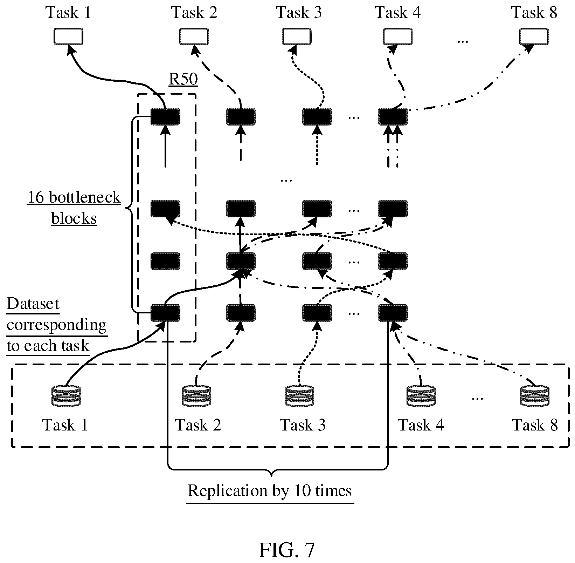

FIG. 7 shows a diagram of a structure of a constructed dynamic network according to an embodiment of this application.

Refer to FIG. 7. For the eight tasks that need to be trained in this embodiment of this application, the model training software may correspondingly generate the structure configuration file of the target model.

A process of constructing the corresponding dynamic network based on the structure configuration file may include: first constructing a single-task network structure, for example, R50 shown in FIG. 7, that is, a 50-layer residual network ResNet-50, and initializing a network parameter of a residual network at each layer. The constructed single-task network structure is vertically divided into a plurality of modules. For example, R50 is vertically divided into 16 bottleneck blocks bottleneck block. The bottleneck blocks obtained through division are a basic unit in the constructed dynamic network. Then, the 16 bottleneck blocks that are vertically distributed are horizontally replicated by N times, for example, 10 times, so that a dynamic network shown in FIG. 7 can be constructed. To simplify description, the data preprocessing layer 411 shown in FIG. 4 is not shown in a structure of the dynamic network shown in FIG. 7.

It may be understood that network structures of the bottleneck blocks may be the same or may be different, and computation parameters of the bottleneck blocks may be initialized to be the same or may be random different network parameters. This is not limited herein. According to requirements of the eight to-be-trained tasks, a corresponding structure configuration file may provide obtaining parameters of some bottleneck blocks in a historical model having a similar task, to obtain corresponding historical units as some basic units in the constructed dynamic network. This is not limited herein.

It may be understood that, in some embodiments, a historical unit in a historical module having a similar function may be added to a corresponding basic unit layer as an optional basic unit, or the like. In some other embodiments, a newly-added unit may alternatively be created for a to-be-trained target model task and added to a corresponding basic unit layer. This is not limited herein.

It may be understood that, in the dynamic network constructed in this step, sparse connectivity is used between layers and between basic units of each layer. For example, a path selector of each layer of the dynamic network may select, from the layer, one or more basic units participating in a path, or may not select a basic unit from the layer, that is, the path formed by the selected basic units may skip the layer.

603: Initialize a configuration environment for the plurality of tasks based on the constructed dynamic network.

For example, after an initial dynamic network of the target model is constructed, related parameters of each task may be initialized based on the task network structure and the task network parameter in the structure configuration file, including initializing a basic unit path parameter of each task, initializing a computation parameter of each basic unit in the dynamic network, and the like. The initialization process may include performing random initialization on a computation parameter of each preset unit in the dynamic network constructed based on the structure configuration file in step 602. It should be noted that if the basic unit is a historical unit provided by a historical model, a historical computation parameter of the corresponding historical unit in the historical model is directly used. It may be understood that the initialization process may further include initializing a path parameter of each task in each task set.

As described above, each basic unit layer of the constructed dynamic network may create a corresponding path selector for each task, and initialize probabilities $p_1, p_2, ..., p_N$ of selecting each basic unit by the path selector at each layer. Therefore, there are a total of $T \times L$ obtained path selectors, where $T$ is a quantity of tasks and $L$ is a total quantity of layers. It may be understood that, for each basic unit layer, a skipping unit may be further disposed. When a path selector selects a skipping unit at a layer, it may indicate that a path of a task skips the layer.

For example, for the dynamic network shown in FIG. 7, the 16 vertically distributed bottleneck blocks obtained by dividing R50 form 16 basic unit layers of the dynamic network after horizontal replication. Therefore, for the eight to-be-trained tasks, 8*16 path selectors may be constructed, that is, each task corresponds to 16 path selectors.

In some other embodiments, for different tasks, a unified path selector may also be created at each basic unit layer in the foregoing constructed dynamic network, and the path selector may allocate a group of basic unit selection probabilities $p_1, p_2, ..., p_N$ to different tasks during initialization. In this case, there may be $L$ path selectors, and there may be $T$ groups of path parameters initialized on each path selector, where $T$ is the quantity of tasks, and $L$ is the total quantity of layers. For example, a path selector is disposed on each layer of the 16 basic unit layers shown in FIG. 7. The path selector may configure different probability parameters for different tasks, to select a basic unit of a corresponding layer when a path is sampled for each task. This is not limited herein.

It may be understood that the probability parameters $p_1, p_2, ...,$ and $p_N$ initialized of the tasks respectively represent probability values or preference degrees of selecting basic units for the tasks at the layer, where $p_1$

$+p_2+...+p_N=1$. For example, if $p_1=0.9$, it indicates that the task prefers a first basic unit. If $p_3$ is a minimum value in $p_N$, it indicates that the task least prefers a basic unit corresponding to $p_3$.

It may be understood that the model training software running in the server cluster may initialize, based on the task network structure and the task network parameter in the structure configuration file, the dynamic network parameter constructed based on the structure configuration file, and use the initialized dynamic network parameter as an initialized model parameter. The path selector may be, for example, a prediction module that corresponds to each task and that is established in the dynamic network based on the task network structure and the task network parameter. The path selector is used to infer an optimal path corresponding to each task when each task of the target model is trained.

It may be understood that the constructing the dynamic network of the target model in step 602 and the initialization process performed in step 603 correspondingly include content corresponding to step 2 shown in FIG. 5, that is, initializing the structure and the parameter of the dynamic network and initializing the probability parameter.

604: Separately perform task sampling on each task in the task set by using a plurality of training units, and perform concurrent data sampling of a plurality of tasks on datasets corresponding to the tasks.

For example, the model training device may be, for example, a server or a server cluster. In this way, the model training device may provide a group of training unit arrays for a plurality of to-be-trained tasks, and the array may include a plurality of training units. Each training unit may be, for example, a graphics processing unit (Graphic Processing Unit, GPU), a tensor processing unit (Tensor Processing Unit, TPU), or an Ascend AI chip including a plurality of GPUs. This is not limited herein. The GPU is used as an example. When a plurality of tasks of the target model are trained based on the neural network architecture in this application, each GPU in the training unit array provided by the model training device may separately sample one task and sample a batch of training data corresponding to the corresponding task for one time of iterative training. In a sampling process, GPUs may be controlled to sample different tasks as much as possible for training. In this way, diversity of tasks of one time of iterative training is ensured, and a same batch of training data includes training data separately sampled corresponding to each task.

It may be understood that a task sampling manner of each training unit for each task may be random sampling, or may be fixed sampling. This is not limited herein. The fixed sampling may be fixedly selecting a fixed task for each training unit. For example, ImageNet classification is fixedly selected for four training units GPU 0 to GPU 4, COCO detection is fixedly selected for a GPU 5 to a GPU 10, and the rest may be deduced by analogy. In addition, in a process in which each GPU performs corresponding data sampling based on a sampled task, each GPU may select batch_size (batch_size) pieces of sample data from a specific dataset corresponding to the sampled task for training. In other words, each GPU may sample batch_size pieces of sample data based on a computation resource that needs to be consumed by the sampled task. For example, the GPU 0 to the GPU 4 may separately sample sample data of 128 ImageNet21K classification tasks in each iteration, and the GPU 5 to the GPU 10 may separately sample sample data of eight COCO datasets in each iteration. A computation resource consumed by one piece of classification sample data is far less than a computation resource consumed by one piece of COCO detection sample data.

It may be understood that the model training device may be, for example, a server having an Ascend AI chip, or another computing device having a GPU, or a TPU, or some computing devices constructed by using a virtualization technology, for example, a vGPU. This is not limited herein.

It may be understood that, during task sampling, a sampling task is allocated to each training unit. A task sampling process is that the training unit selects a task from the task set based on a predefined sampling probability. It should be understood that a process of training the target model generally includes a plurality of training units. For example, when there are four servers and each server has eight GPUs, 32 GPU devices may be used as training units to perform task sampling. Processes of selecting tasks by the training units are independent of each other. In other words, different tasks may be selected, or a same task may be selected. In this way, in an overall process of training the target model, the tasks selected by the training units are not single, but can cover a plurality of tasks. This sampling process is referred to as "one iteration and multi-task concurrency". After the tasks are sampled, a batch (batch) of training data is sampled from a corresponding dataset for each task. The batch of training data may be a small subset of a dataset used in the overall training process, for example, training data including 32 samples, so that a current training unit can perform fast computing and training on the sampled training data.

For the foregoing example, if the model training device configured to perform joint training of the foregoing eight tasks in parallel is a server cluster with 10 servers, and each server may include, for example, eight Ascend AI chips, each training unit may be one Ascend AI chip. Further, when joint training of the foregoing eight tasks is performed based on the dynamic network shown in FIG. 7, the eight Ascend AI chips on each server may be fixedly set to separately perform task sampling on the eight tasks. Further, the Ascend AI chips on each server may sample datasets of corresponding tasks to perform joint training of the eight tasks.

It may be understood that the training process performed in step 604 correspondingly includes content corresponding to step 3 shown in FIG. 5, that is, sampling one task on each GPU to ensure diversity of current batch tasks, and performing corresponding data sampling based on the tasks.

605: Respectively sample an initialization path for each task based on the preset probability parameter.

For example, each training unit of the model training device may correspondingly sample a group of initialized basic unit paths for each task based on a preset probability parameter in a task network parameter corresponding to the sampled task. It may be understood that the basic unit path is a directed sequence including a group of basic units. Each basic unit path corresponds to an execution logic. In other words, all basic units in the path are executed in sequence. An output of a previous unit is used as an input of a next unit. In some embodiments, the basic unit path may be cross-layer. In other words, a basic unit does not need to be selected at each layer, and a layer that is in a dynamic network and that is not required when a corresponding task is executed may be skipped during path sampling. In addition, in some embodiments, different basic unit paths may choose to share a same basic unit. If one basic unit is selected by a plurality of paths, in a training process of each corresponding task, a computing parameter corresponding to the basic unit is simultaneously updated by gradient average values calculated in different paths.

In this way, based on the solutions of this application, in a process in which the model training device performs joint training of a plurality of tasks by using each training unit to separately sample a task, optimization of computing parameters of preset units on task paths corresponding to the tasks can be mutually promoted. For example, for the basic unit selected by the plurality of paths, tasks corresponding to the paths are usually tasks of a same type. Therefore, when path parameters of the task paths and the computing parameters corresponding to the preset units are updated by gradient average values calculated by the different paths, superimposition effect may be generated, and optimization effect is better.

It may be understood that the training process performed in step 605 correspondingly includes content corresponding to step 4 shown in FIG. 5. To be specific, the dynamic network samples a group of paths based on the probability parameter, and the sampled paths are gradually converged to a final path solution in the training process. A specific process of training the initialization path to converge the probability parameters is described in detail in the following steps 606 and 607. Details are not described herein again.

606: Infer a model based on the sampled path and calculate gradients of the training units and a gradient average value.

For example, the GPU is used as an example. A gradient of each GPU that trains a corresponding task may be determined, for example, based on a loss function of the corresponding task. For example, for the classification task, a corresponding gradient may be obtained through calculation by using a calculation result of a cross entropy loss function and derivation calculation, and for the detection task, a corresponding gradient may be obtained through a mean square error loss function and derivative calculation. This is not limited herein. The gradient that is obtained through calculation and that is of each training unit indicates a update direction that is of path parameter and that is expected by sample data b in a task t on the training unit. The gradient that is obtained through calculation and that is of each training unit also includes a gradient of a path parameter that is in the path selector and that corresponds to a corresponding task.

On each training unit, the dynamic network performs forward inference on sampled data of a corresponding task based on $w_i$ of a sampled path and calculates a loss. For example, in a forward process, an average value and a variance that are of BN across training units (that is, across Ascend chips) may be calculated based on synchronous BN, to accurately estimate a cross-task gradient average value and statistics. A reverse process is a gradient calculation process on a single training unit. For example, a gradient direction and a gradient average value of a full model may be calculated based on a loss corresponding to each task, and then a path parameter corresponding to each task and a model parameter are updated based on the gradient average value obtained through calculation. For example, an average value of gradients on the training units may be calculated across the training units, including calculating an average gradient based on a solution, for example, ring all-reduce or reduce-scatter. The average gradient indicates an average value of update directions that are of path parameters and that are expected by task sample data on the training units, and the average gradient obtained through calculation is synchronized to each training unit. Further, a stochastic gradient descent (SGD) optimizer updates all parameters in the model based on the average gradient obtained through calculation. It can be understood that the average gradient can integrate task path losses on the training units, to implement balanced adjustment on related parameters of the task paths of the tasks that are being trained. This helps promote joint optimization of training data corresponding to the plurality of tasks.

It may be understood that the training process performed in step 606 correspondingly includes content corresponding to step 5 shown in FIG. 5, that is, inferring the model based on the sampled path and calculating the gradient of the current GPU.

607: Update, based on the gradient average value obtained through calculation, the path parameter corresponding to each task and the model parameter.

For example, the training unit is a GPU. When a plurality of GPUs perform concurrent training of a plurality of tasks on different datasets, the model parameter is stored on one specified GPU, and copies of the model parameter are stored on different GPUs. In each time of training, after the data sampled in step 604 is sent to the training units, the GPUs may perform forward training on tasks separately sampled, that is, forward training is performed on different GPUs. When the model parameter is updated, the model training device may average gradient data obtained through backward calculation by the plurality of GPUs, and update the path parameter corresponding to each task and the model parameter on the specified GPU by using the gradient data.

For example, a process of calculating the gradient average value of the GPUs, that is, the average gradient, and updating, based on the average gradient, the path parameter corresponding to each task and the model parameter may be, for example: first calculating the average gradient based on a gradient corresponding to a parameter like a path sampling probability obtained through calculation on each training unit, and then updating, by using an optimizer like stochastic gradient descent (Stochastic Gradient Descent, SGD), a sampling probability parameter and the like of each path in the model.

It may be understood that a gradient value that is obtained through calculation that is of each training unit may reflect, to some extent, a loss degree corresponding to a corresponding sampled path. A task execution path corresponding to a task trained by each training unit includes a basic unit selected by a related basic unit layer of an entire dynamic network. Because a most suitable execution path is not known to each task at an early stage of training, in a multi-task learning process based on the solutions of this application, an initialization path corresponding to each task may be first determined in a step-by-step exploration manner, then, a corresponding loss function is used to continuously adjust a basic unit sampling probability parameter corresponding to each initialization path, and a final execution path corresponding to each task is finally obtained through convergence.

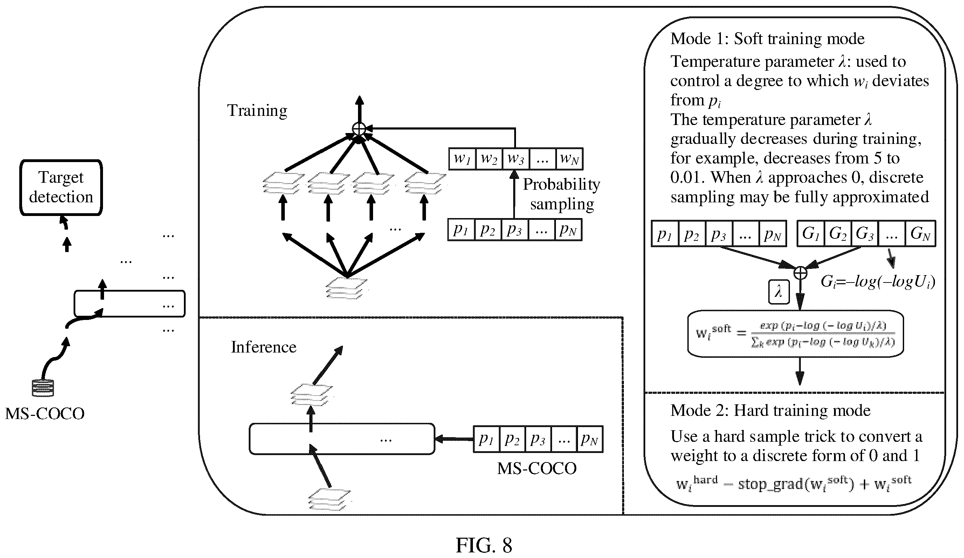

It may be understood that, in the model training process, when a process in which each training unit completes one time of model inference, and adjusts, based on the gradient average value obtained through calculation, the path parameter corresponding to each task and the model parameter is completed, an adjustment process of a path parameter corresponding to each task is completed. This process is performed until a parameter convergence condition is met. For example, a path parameter that meets the convergence condition, a probability parameter of selecting each basic unit on a corresponding task path, and a computing parameter of each basic unit all correspondingly meet the convergence condition. When a corresponding task path performs a corresponding task operation, a cross entropy loss and the like of a corresponding operation result reach a minimum value or are less than a preset value. The path parameters corresponding to the tasks are essentially a group of N-dimensional probability parameters. A specific process of adjusting each group of N-dimensional probability parameters in an entire model training process is described in detail in the following with reference to FIG. 8. Details are not described herein again.

It may be understood that the training process performed in step 607 correspondingly includes content corresponding to step 6 shown in FIG. 5, that is, calculating the average value of the gradients of the GPUs, and updating the probability parameter corresponding to each task and the model parameter based on the average gradient.

608: Determine whether a model training convergence condition is met. If a determining result is yes, the following step 609 may be performed to end the training. If a determining result is no, the foregoing process of steps 604 to 607 may be repeatedly performed, and then, the determining process of step 608 is performed again.

For example, a convergence condition preset for the target model may also be correspondingly recorded in the structure configuration file generated in step 602. For example, includes a task convergence condition recorded in the task network parameter and a model parameter convergence condition recorded in the basic network parameter. For example, in a process in which each training unit in the model training device trains a task and a path that are obtained through sampling this time, when a basic unit path determined by a path parameter corresponding to each task executes a corresponding processing processing task, a loss of a corresponding processing result is minimized. In this case, it may be determined that each task meets a corresponding task parameter convergence condition. If it is determined that the model training convergence condition is met, that is, the determining result is yes, it indicates that an optimal path is found for each task trained by the target model, and a computing parameter of a preset unit on a path corresponding to each task is adjusted. In this case, the target model has an optimal capability for processing a plurality of tasks, and the following step 609 may be performed to end the training. If it is determined that the model convergence condition is not met, that is, the determining result is no, it indicates that path parameters of some tasks or all tasks still need to be adjusted, and the target model parameter also needs to be further trained and adjusted. In this case, the process of steps 604 to 607 may be repeated, then, the determining process in step 608 is performed again.

609: Complete the training process of the plurality of tasks, and end model training to obtain the target model.

In this case, based on steps 601 to 609 shown in FIG. 6, the training process in which training of the plurality of tasks is completed through one time of model training can be implemented through concurrent training of the plurality of tasks. In addition, the concurrent training of the plurality of tasks can promote task path optimization between the tasks, and can promote each task to sample data in different datasets to optimize a training result, thereby increasing data diversity. In addition, in the neural network architecture defined by the configuration file template provided in this embodiment of this application, an input task set may support a dataset in a plurality of modalities, to train the tasks of the target model. Therefore, the target model trained based on the procedure shown in FIG. 6 also has the capability of processing cross-modal data.

FIG. 8 shows a diagram of a process of adjusting path parameters respectively corresponding to tasks in a model training process according to an embodiment of this application.

As shown in FIG. 8, for an N-dimensional probability parameter in a path parameter corresponding to each task, an adjustment manner combining a soft mode (based on a soft training mode shown in FIG. 8) and a hard mode (based on a hard training mode shown in FIG. 8) may be used.

As shown in FIG. 8, probability vectors $w_1$, $w_2$, ..., $w_i$ obtained through sampling based on the initialized basic unit selection probabilities $p_1$, $p_2$, ..., and $p_i$ in step 603 are output by the soft mode, where $i \leq N$.

It may be understood that a higher value of $p_i$ may correspond to a higher value of $w_i$. Specifically, a calculation formula between a preset value of $p_i$ and a value of $w_i$ output through sampling may be:

$$w_i^{\text{soft}} = \frac{exp(p_i - log(-log\, U_i)/\lambda)}{\sum_k exp(p_i - log(-log\, U_k)/\lambda)} \quad (1)$$

$w_i^{\text{soft}}$ is a probability vector output by the soft mode; $p_i$ is a preset sampling probability of each basic unit; $U_i$ is a random number obtained through sampling from 0 to 1 uniform distribution, and is randomized again each time the formula is used for calculating a sampling probability; and $\lambda$ is a temperature parameter, and is used to adjust a degree to which a sampled $w_i$ deviates from $p_i$. In the foregoing formula (1), $-log(-log\, U_i)$ may be represented as $G_i$, to convert uniformly distributed pi randomized in the initialization process into Gumbei distribution.

It may be understood that after the probability parameters $w_1$, $w_2$, ..., and $w_i$ are obtained through sampling, each layer may determine a weighted output of a basic unit, that is, $w_0 F_0 + w_1 F_1 + \cdots$. $F_i$ is an output of each basic unit on the sample. A result of the weighted output may be substituted into the foregoing formula (1), and $w_i^{\text{soft}}$ may be obtained through calculation, and then a maximum value of $w_i$ is determined as a probability parameter of a corresponding path for the basic unit.

It may be understood that if $\lambda$ larger, sampled $w_i$ may deviate more from $p_i$, indicating that the sampled path is more exploratory, and some new basic units or basic units whose current p values are low are more likely to be sampled to form a basic unit path On the contrary. when $\lambda$ is very small. the sampled path prefers to select a basic unit whose current $p$ value is large and has low exploratory performance, and $\{w_1, w_2, ..., w_i\}$ is close to

distribution of the preset probabilities $\{p_1, p_2, ..., pi\}$.

It may be understood that, at the early stage of the model training, each task may try to select different basic units and execution paths as much as possible, and determine whether a path is suitable by calculating a loss on each execution path, to gradually obtain a single path with a minimum loss through convergence at a last stage of the model training, that is, determine a final execution path of each task. For example, a value of the temperature parameter $\lambda$ is set to a large value (for example, 5.0 shown in FIG. 8) at the early stage of the model training. In this case, the path selector selects more basic units at the layer, to explore paths including different basic units. In the training process, the value of the temperature parameter is gradually decreased, and finally decreased to a proper low value (for example, 0.01 or 0.001 shown in FIG. 8). In this case, the path selector may select the path with the minimum loss.

Based on the output result of the soft mode, the probability value vectors $w_1$, $w_2$, ..., $w_i$ are correspondingly converted into vectors of 0 and 1 in the output of the hard mode according to a vector conversion formula. For example, $w_i^{soft}$ obtained through calculation according to the foregoing formula (1) is input to the following calculation formula (2), that is, a hard sample trick (hard sample trick) conversion formula may be used to convert the input into a vector of 0 and 1 for output:

$$w_i^{hard} - \text{stop\_grad}(w_i^{soft}) + w_i^{soft} \quad (2)$$

$w_i^{hard}$ - stop_grad($w_i^{soft}$) + $w_i^{soft}$ is a probability vector output in a hard mode, may be [1, 0] or [0, 1], and $w_i^{soft}$ is a soft mode probability vector sampled based on the foregoing formula (1).

It can be learned from the foregoing formula (2) that $w_i^{hard}$ is a probability vector obtained by performing binarization on $w_i^{soft}$. Specifically, a maximum value in $w_i^{soft}$ is converted into 1, and another value is converted into 0. For example, if the soft mode probability vector sampled based on the foregoing formula (1) is [0.8, 0.2], the soft mode probability vector is substituted into the foregoing formula (2), that is, [1, 0]-stop_grad ([0.8, 0.2]) +[0.8, 0.2], to obtain the hard mode probability vector [1, 0]. For another example, if the soft mode probability vector sampled based on the foregoing formula (1) is [0.2, 0.8], the soft mode probability vector is substituted into the foregoing formula (2), that is, [0, 1]-stop_grad ([0.2, 0.8])+[0.2, 0.8], to obtain the hard mode probability vector [0, 1]. A basic unit whose probability output is 1 is a basic unit selected by a path, and a basic unit whose probability output is 0 is an unselected basic unit.

It may be understood that, in the hard mode sampling implemented by using the foregoing formula (2), when basic units forming the path are selected, derivation may be further performed on the output soft mode probability vector, to facilitate backpropagation.

It may be understood that when the path parameter corresponding to each task and the model parameter are updated in this step, the selected path is correspondingly updated, and forward inference may be performed on the sample training data obtained through sampling in step 604. In the forward inference process, some cross-task statistics may be calculated through communication between the training units (for example, the GPUs), for example, a cross-task BN statistic is calculated through synchronous batch normalization (batch normalization, BN). After forward calculation, a gradient of each parameter in the model may be obtained through calculation based on backpropagation of a deep network, including a gradient of a path sampling probability corresponding to each task. For related processes of forward inference and backpropagation, refer to existing related descriptions. Details are not described herein again.

In this embodiment of this application, based on the implementation process of the procedure shown in FIG. 6, a corresponding path selector may be created in the dynamic network of the constructed target model for each task participating in training, and training is performed based on the steps shown in FIG. 6. According to the training process, both the computing parameter of each basic unit in basic units in the constructed neural network architecture and the probability parameter of selecting the basic unit by the path selector corresponding to each task can reach corresponding optimal values through learning. For any single task, only one group of paths are sampled for inference, and path parameters are adjusted during training. Basic units that are not on the corresponding task paths are not used. Therefore, for each single task, a calculationcomputing amount of inference, a quantity of model parameters, and a used basic single network structure (for example, R50 shown in FIG. 7) are completely the same. Only when joint training of the plurality of tasks is performed, the basic single network structure is expanded by N times through replication. This indicates that the neural network model training solution provided in this embodiment of this application has high scalability.

Beneficial effect that can be implemented by the neural network model training method provided in this embodiment of this application for joint training of a plurality of tasks may be reflected through some test data.

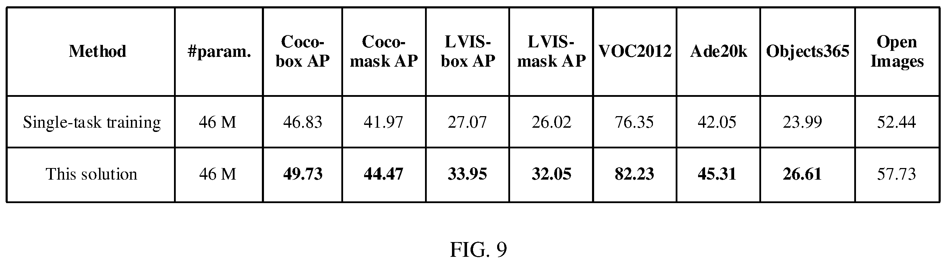

FIG. 9 is a diagram of an accuracy test result of performing corresponding data processing based on a task trained in a solution in this embodiment according to an embodiment of this application.

As shown in FIG. 9, for the detection tasks Open Images and Objects365, for example, a task accuracy rate may be tested by using box ap, and a principle thereof is to calculate an average precision (average precision) of a bounding box (bounding box).

For the segmentation tasks ADE20K, COCO-Stuff, and Pascal-VOC 2012, mask ap or miou may be used to a test task accuracy rate.

For the detection and segmentation tasks COCO and LVIS, mask ap can be used to test a task accuracy rate.

It can be learned by comparing accuracy test experiment data shown in FIG. 9 that accuracy rates that can be achieved by the eight tasks on which training is completed in embodiments of this application are all improved compared with accuracy rates that can be achieved by the eight tasks on which single-task training is separately performed.

The following describes, with reference to another Embodiment 2, a specific implementation process of training a newly-added task based on the neural network model training method provided in embodiments of this application.

## Embodiment 2

This embodiment relates to a process of training a newly-added task based on a trained neural network model.

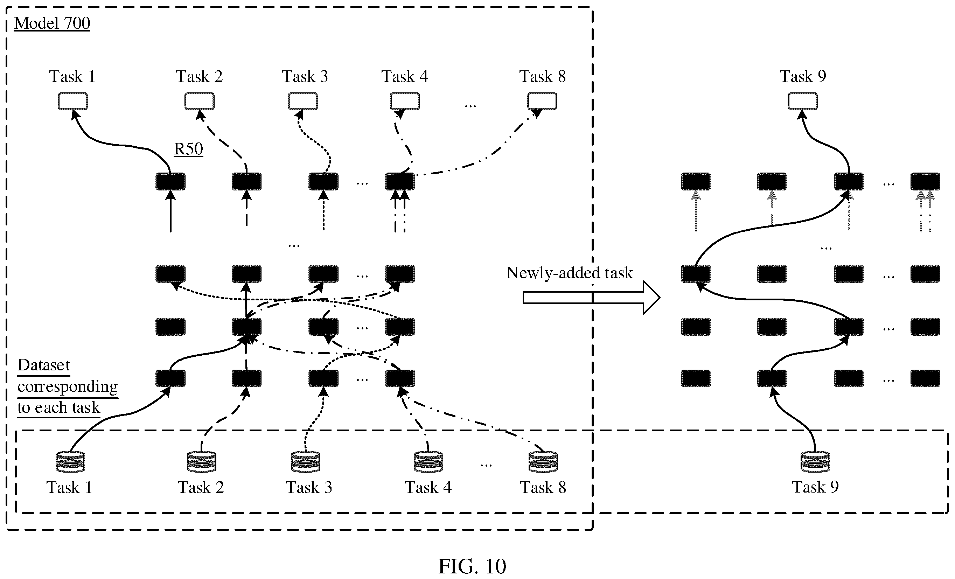

FIG. 10 is a diagram of a scenario of fine-tuning and training a newly-added task based on a trained target model according to an embodiment of this application.

As shown in FIG. 10, a model 700 obtained through joint training based on the eight tasks in Embodiment 1 is used as a pre-trained model, and has a capability of executing the eight tasks trained in Embodiment 1. When the model 700 executes a downstream task, if a newly-added task 9 needs to be trained, a path parameter corresponding to the task may be trained and fine-tuned based on a dynamic network structure of the model 700 and a model parameter determined through training. It may be understood that, compared with the newly-added task, the model 700 may be a pre-trained model. This is not limited herein.

It may be understood that a deep learning model is usually a data-driven model. When "a small amount of data+a large model" occurs, overfitting or poor generalization may occur in the model. A solution to this problem is to use a pre-trained model.

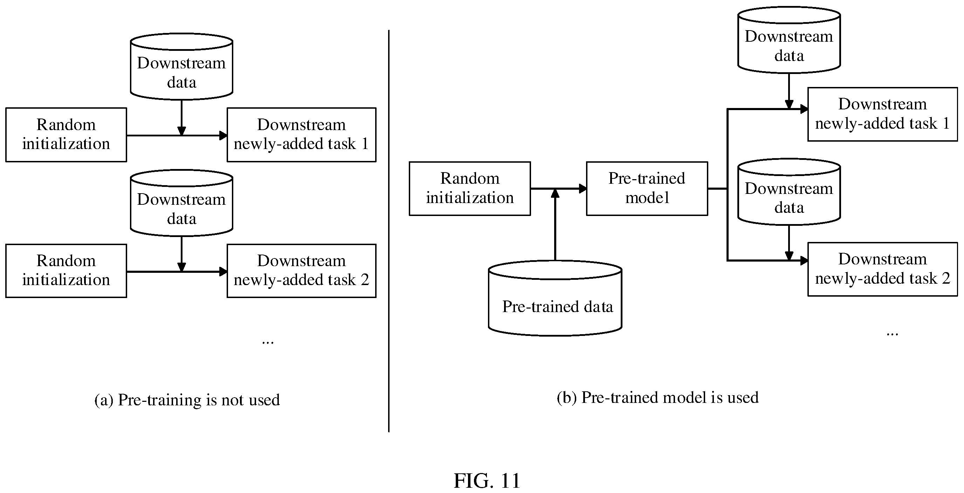

FIG. 11 is a diagram of comparison between a training process in which no pre-trained model is used and a training process in which a pre-trained model is used according to an embodiment of this application.

As shown in (a) in FIG. 11, when the pre-trained model is not used, after random initialization is performed on a to-be-trained model, newly-added tasks, namely, a downstream newly-added task 1 and a downstream newly-added task 2 shown in (a) in FIG. 11, in the model are directly trained based on downstream data. The trained model lacks basic representations. Therefore, a capability of the trained newly-added task of processing downstream data is weak.

As shown in (b) in FIG. 11, when the pre-trained model is used, a pre-trained model is first obtained through training by using a related dataset. The pre-trained model already has a strong expression capability and a complete basic representation. For example, the pre-trained model based on which the newly-added task is trained in this application may be the model 700 trained based on the neural network model training method provided in Embodiment 1.

Still refer to in (b) in FIG. 11. Further, during downstream task training, the downstream newly-added task may be trained based on the foregoing pre-trained model, and fine-tune a model parameter of the pre-trained model. In this way, some common knowledge (for example, basic visual texture) may be migrated to the newly-added task, to avoid a problem in which the newly-added task is difficult to learn a complete data feature due to a small data amount, and improve generalization of a model in which the newly-added task is trained.

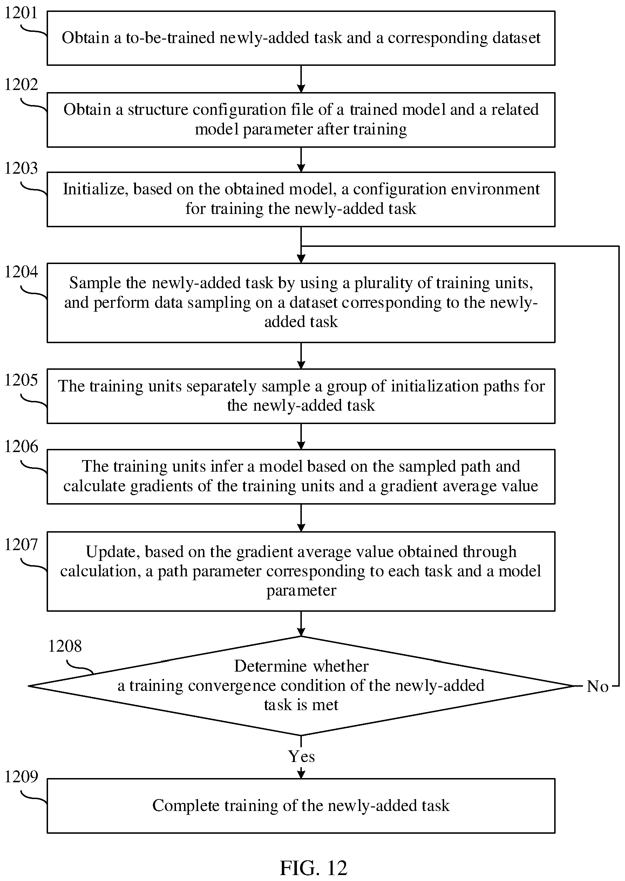

FIG. 12 is a schematic implementation flowchart of training the newly-added task based on the trained target model according to an embodiment of this application.

As shown in FIG. 12, the procedure includes the following steps.

1201: Obtain a to-be-trained newly-added task and a corresponding dataset.

It may be understood that a process of obtaining the newly-added task and the corresponding dataset in this step may be similar to the process of obtaining the task set in step 601. The task set includes a plurality of tasks and datasets corresponding to the tasks. For specific execution content of this step, refer to related descriptions in step 601. Details are not described herein again.

1202: Obtain a structure configuration file of a trained model and a related model parameter after training.

A difference from step 602 in Embodiment 1 lies in that in this step, a dynamic network does not need to be created, but a dynamic network structure of the trained neural network model and related parameters such as a trained model parameter and a path parameter of each task may be obtained for reuse.

1203: Initialize, based on the obtained model, a configuration environment for training the newly-added task.

A difference from step 603 in Embodiment 1 lies in that, in this step, related parameters of the dynamic network used to train the newly-added task are not randomly initialized, but the target model obtained through training in Embodiment 1 is directly used as a pre-trained model, that is, related parameters of the dynamic network of the model 700.

1204: Sample the newly-added task by using a plurality of training units, and perform data sampling on a dataset corresponding to the newly-added task.

1205: The training units separately sample a group of initialization paths for the newly-added task.

1206: The training units infer a model based on the sampled path and calculate gradients of the training units and a gradient average value.

1207: Update, based on the gradient average value obtained through calculation, the path parameter corresponding to each task and the model parameter.

1208: Determine whether a training convergence condition of the newly-added task is met.

1209: Complete training of the newly-added task.

Content performed in step 1204 to step 1209 is similar to that performed in step 604 to step 609, and a difference lies only in that the trained model task is a task newly added based on each trained task, the newly-added task may be a task newly added based on a processing requirement when the trained model processes downstream data collected in real time in actual application.

It may be understood that if there is only one downstream newly-added task, joint training of a plurality of tasks does not need to be performed. In this case, all training units (for example, GPUs) on a model training device may be uniformly used to train the newly-added task. If there are a plurality of downstream newly-added tasks, the model training device may further perform concurrent training of the plurality of tasks again by running corresponding model training software. For details, refer to the training process of the neural network model according to Embodiment 1.

It may be understood that, based on the training process of the newly-added task in steps 1201 to 1209 shown in FIG. 12, when there is one or a small quantity of newly-added tasks, a plurality of training units may explore paths of the newly-added tasks in parallel, and sample data in parallel to train the newly-added tasks, so that optimal paths of the newly-added tasks can be determined more quickly and efficiently. Therefore, training efficiency of the newly-added tasks is greatly improved.

In addition, in the newly-added task training solution provided in embodiments of this application, optimal paths of eight tasks are learned in depth in the trained model on which the solution is based, and a process of executing a trained task path corresponding to each task can promote path optimization of the newly-added task. In this way, the trained newly-added task can inherit a related parameter of a task path corresponding to each trained task. In this way, in the solutions of this application, an advantage like a high accuracy rate of the related parameter can be inherited during training of the newly-added task, so that optimization effect is enhanced, and training effect of the newly-added task is improved.

Beneficial effect that can be implemented by the neural network model training method provided in embodiments of this application for joint training of a plurality of tasks may be reflected through some test data.

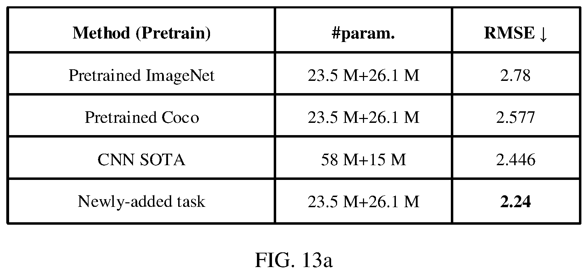

FIG. 13a is a schematic diagram of comparison of corresponding error calculation results of the newly-added task obtained through training relative to a trained task when corresponding data is processed according to an embodiment of this application.

As shown in FIG. 13a, when the newly-added task trained based on the solution provided in an embodiment of this application and some tasks in the trained model 700 process a same type of dataset, a root mean square error (Root Mean Square Error, RMSE) corresponding to each task is calculated. It can be understood that a lower RMSE is better.

Refer to FIG. 13a. For datasets of a same order of magnitude, for example, a dataset #param. including a quantity of 23.5 M+26.1 M is processed, an error corresponding to the newly-added task trained based on the solution provided in this embodiment of this application is small, and is only 2.24. This error is still small compared to an error of 2.446 corresponding to a pre-trained CNN SOTA processing a dataset #param. including a larger quantity of 58 M+15 M . This indicates that the newly-added task trained based on the solution provided in this embodiment of this application achieves quite high precision in both depth estimation and dataset detection.

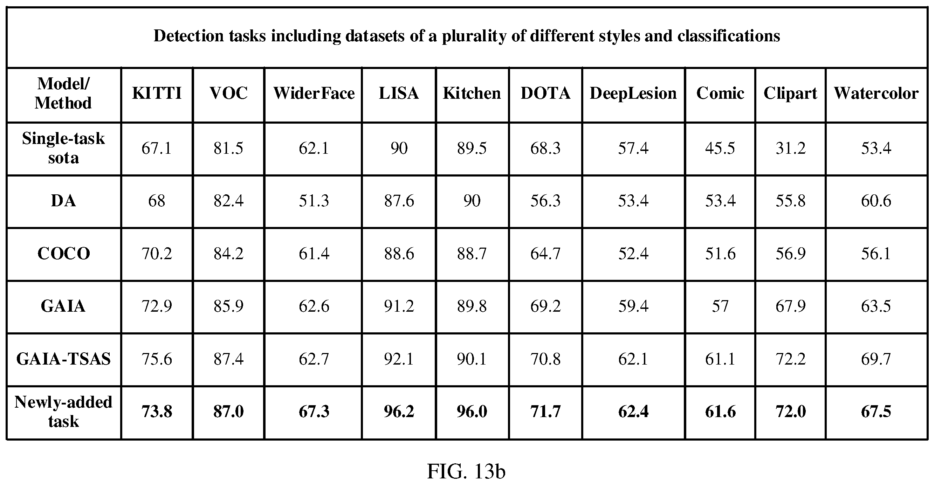

FIG. 13b shows a comparison table of accuracy test results corresponding to the newly-added task trained based on the solution in this embodiment and a trained task when different datasets are processed according to an embodiment of this application.

As shown in FIG. 13b, compared with a sota task trained through single-task training, the newly-added task trained in the solution of this application has a high accuracy rate in processing datasets such as KITTI, VOC, and WiderFace. Compared with tasks such as DA, COCO, and GAIA in the trained model, an accuracy rate of processing the dataset by the newly-added task trained in the solution of this application can keep at a high level.

A corresponding reason for the comparison results shown in FIG. 13a and FIG. 13b is that the trained model is used as the pre-trained model, and corresponding historical tasks cover a wide area. Compared with a single-task pre-trained model, in the solution of this application, more information can be transferred to the newly-added task.

The following describes, with reference to another Embodiment 3, a specific implementation process of training an artificial dataset based on the neural network model training method provided in embodiments of this application, to improve an accuracy rate of processing specific data by the model.

## Embodiment 3

This embodiment relates to applying artificial data to a neural network model training solution provided in embodiments of this application, to train a task of a target model to learn a specific data feature, thereby improving a capability of processing specific data.

It may be understood that the artificial data may be compiled based on a task that needs to be trained, and may be CG rendering data, drawing data, and other data that has a same attribute but has a different appearance.

The artificial data is characterized by a simple obtaining manner, a low cost, and easy obtaining in a large quantity. For application scenarios of some models, when actual data is difficult to obtain, it is difficult to train a model with a high accuracy rate. However, if some artificial data similar to actual data can be effectively constructed as training data to assist training, twice the result is yielded with half the effort.

However, many related studies show that if the artificial data and the actual data are directly and simply fused, and a dataset is directly synthesized for training, because a training process is isolated, each task can learn only a feature of the artificial data or a feature of the actual data. When a difference between the artificial data and the actual data is large, training effect of actual data is affected. A current neural network training solution cannot avoid negative effect caused by such simple fusion. Therefore, this embodiment provides a neural network model training method according to embodiments of this application to resolve this problem.

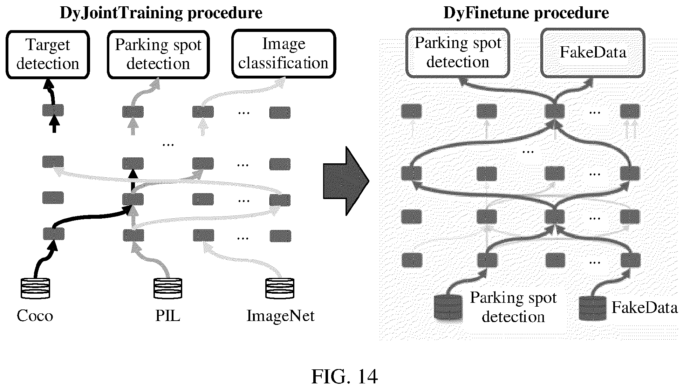

FIG. 14 shows a diagram of a scenario of training a plurality of existing tasks of a model to learn a new dataset according to an embodiment of this application. As shown in FIG. 14, in a completed model training process, a to-be-trained target detection task, a parking spot detection task, and an image classification task are respectively obtained through training based on datasets COCO, PIL, and ImageNet. When these tasks need to learn a capability of detecting an oblique parking spot, a newly-added fake data task (referred to as a newly-added fake task) may be created to perform joint training in parallel with the trained tasks.

Refer to FIG. 14. Joint training of the parking spot detection task and the newly-added fake task FakeData is performed. A dataset including newly-added artificial oblique parking spot fake data (FakeData) may provide training data for the tasks in joint training. In this way, in a joint training process of a plurality of tasks, a trained target task in a model samples fake data to learn a feature that is expected to be learned by the task and that is in the fake data, so that the fake data and the actual data can be fused in the task training process, and the target task is fine-tuned and optimized.

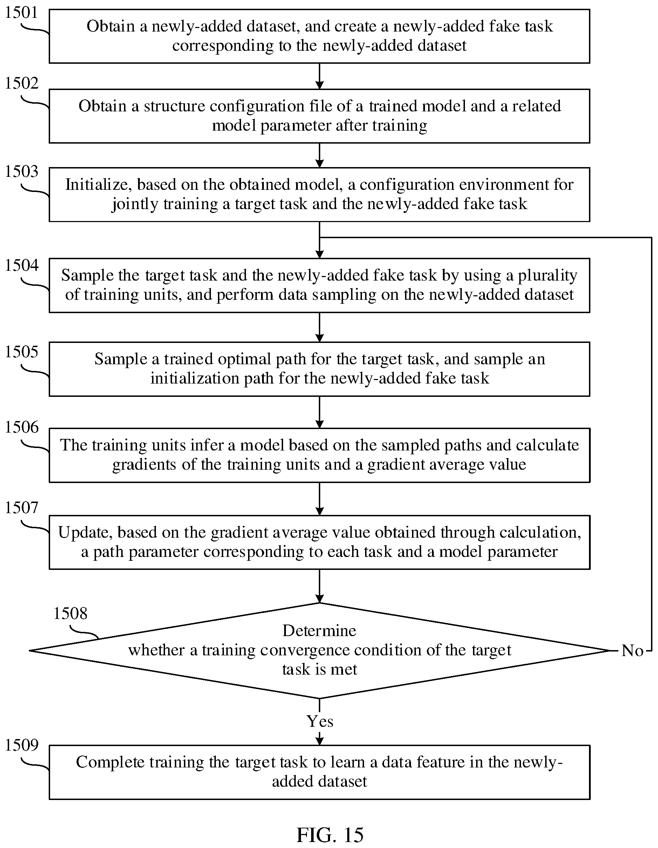

FIG. 15 shows a schematic implementation flowchart of training the newly-added task based on the trained target model according to an embodiment of this application.

As shown in FIG. 15, the procedure includes the following steps.

1501: Obtain a new dataset, and create a new fake task corresponding to the new dataset.

1502: Obtain a structure configuration file of a trained model and a related model parameter after training.

A difference from step 602 in Embodiment 1 lies in that in this step, a dynamic network of a target model does not need to be created, and a trained model network and a related parameter are directly obtained.

1503: Initialize, based on the obtained model, a configuration environment for jointly training a target task and the newly-added fake task.

A difference from step 603 in Embodiment 1 lies in that in this step, random initialization is not performed on a related parameter of the dynamic network used to learn a newly-added dataset, but the target model obtained through training in Embodiment 1 is directly used as a pre-trained model, and a trained computing parameter of a basic unit used to execute each task, a related parameter of an optimal path corresponding to each task, and the like are provided. Details are not described herein. The target task is a trained task that needs to learn a data feature in a newly-added dataset, and the newly-added dataset may be, for example, a dataset including artificial fake data FakeData.

The parking spot detection is used as an example. Parking spots are classified into vertical parking spots, horizontal parking spots, and oblique parking spots. However, in actual collected data, there is a small amount of oblique parking spot data. As a result, precision of detecting oblique parking spots by using a trained neural network model is low. Based on the solutions of this application, some oblique parking spots may be manually drawn based on some images, so that the model learns features of these drawn oblique parking spots.

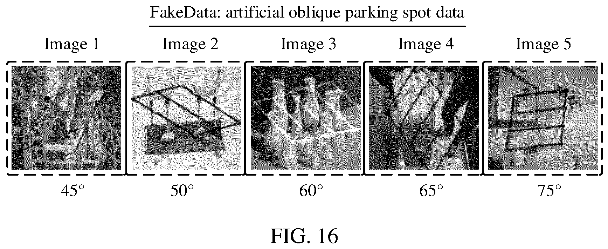

FIG. 16 shows a diagram of drawing an oblique parking spot based on a random image as training data of a parking spot detection task according to an embodiment of this application. Refer to FIG. 16. For example, an oblique parking spot contour line with an inclination angle of 45° may be constructed on a random image 1, an oblique parking spot contour line with an inclination angle of 50° may be constructed on an image 2, an oblique parking spot contour line with an inclination angle of 60° may be constructed on an image 3, an oblique parking spot contour line with an inclination angle of 65° may be constructed on an image 4, an oblique parking spot contour line with an inclination angle of 75° may be constructed on an image 5, and the like. In this manner, oblique parking spot fake data (FakeData) with a plurality of inclination angles may be constructed as artificial oblique parking spot data, to train a parking spot detection task to learn the constructed oblique parking spot data.

1504: Sample the target task and the newly-added fake task by using a plurality of training units, and perform data sampling on the newly-added dataset.

A difference from step 604 in Embodiment 1 lies in that, because some tasks need to be trained to learn artificial fake data (FakeData), in a training process, each training unit may sample such a task. Such a task may be, for example, a target detection task, a parking spot detection task, or an image classification task. This is not limited herein. It may be understood that there may be one or more target tasks that need to learn the newly-added dataset. In this case, the training units may synchronously perform task sampling on the to-be-trained task and the newly-added fake task, to perform multi-task learning, improve training efficiency, and increase an epoch. This also helps improve an accuracy rate of executing a corresponding task by a trained model.

After task sampling is completed, data sampling may be performed on the to-be-learned fake data (FakeData). For a specific task sampling and data sampling process, refer to related descriptions in step 604. Details are not described herein again.

1505: Sample a trained optimal path for the target task, and sample an initialization path for the newly-added fake task.

1506: The training units infer a model based on the sampled paths and calculate gradients of the training units and a gradient average value.

1507: Update a path parameter corresponding to each task and the model parameter based on the gradient average value obtained through calculation.

1508: Determine whether a training convergence condition of the target task is met.

1509: Complete training the target task to learn the data feature in the newly-added dataset.

For a specific execution process of step 1505 to step 1509, refer to related descriptions in step 605 to step 609. Details are not described herein again.

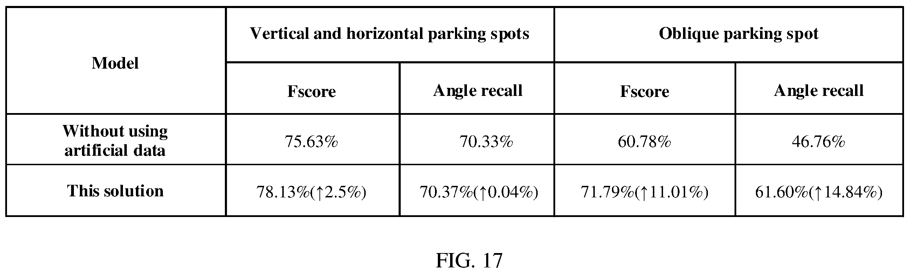

FIG. 17 shows an experimental data comparison table in which effect improvement is brought to an oblique parking spot detection accuracy rate of a model after a model task is fine-tuned and optimized by using artificial oblique parking spot data according to an embodiment of this application.

As shown in FIG. 17, compared with a model trained without using artificial data, in the solution of this application, after joint training is performed, by using artificial oblique parking spot data, on a correspondingly created newly-added fake task, and a related task in the model, accuracy rates of vertical and horizontal parking spot detection are slightly improved and an accuracy rate of oblique parking spot detection is significantly improved by more than 10% in the trained model. It can be learned that the neural network model trained based on the solution of this application helps improve task performance like a detection accuracy rate.

The following describes, with reference to another Embodiment 4, a specific implementation process of setting, in a target model training process based on the neural network model training method provided in embodiments of this application, a shared loss control parameter used to fine-tune a model structure, to obtain a tree-shaped multi-task network. This implements path pruning of each task, saves a calculation amount, and improves model prediction efficiency.

## Embodiment 4

This embodiment of this application provides a solution of setting, in a process of training a target model, a shared loss control parameter used to fine-tune a model structure, to obtain a tree-shaped multi-task network.

It may be understood that, in an actual application scenario, a plurality of tasks in a model usually need to be executed synchronously. For example, in an autonomous driving scenario, a model needs to predict a depth based on data collected in real time, and execute a drivable area segmentation task, a traffic light detection task, an obstacle detection task, and the like. If each task uses a different network, a computing amount of an artificial intelligence device in an autonomous driving vehicle may be very large. As a result, a prediction delay is excessively long, and driving safety is reduced. Even if the plurality of tasks trained in Embodiment 1 of this application use a same network, and each task executes a respective path, it is not conducive to reducing a computing amount of the model. In this scenario, a tree-shaped multi-task network may be used to reduce the computing amount and improve a prediction speed.

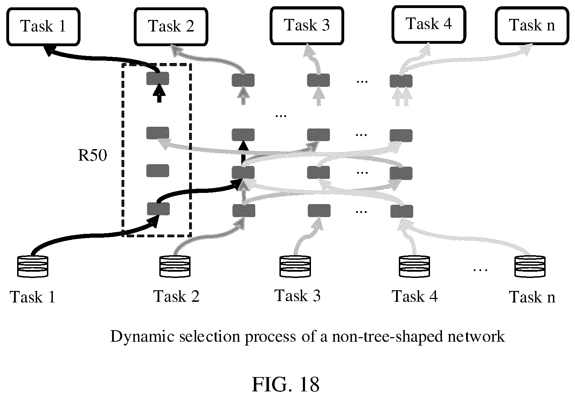

FIG. 18 shows a diagram of a dynamic selection process of a non-tree-shaped multi-task network.

As shown in FIG. 18, when a model needs to synchronously execute a plurality of tasks 1 to n, each task separately executes one path, and a plurality of operations also need to be performed on a basic unit shared by paths. Therefore, a computing amount of the corresponding model is large.

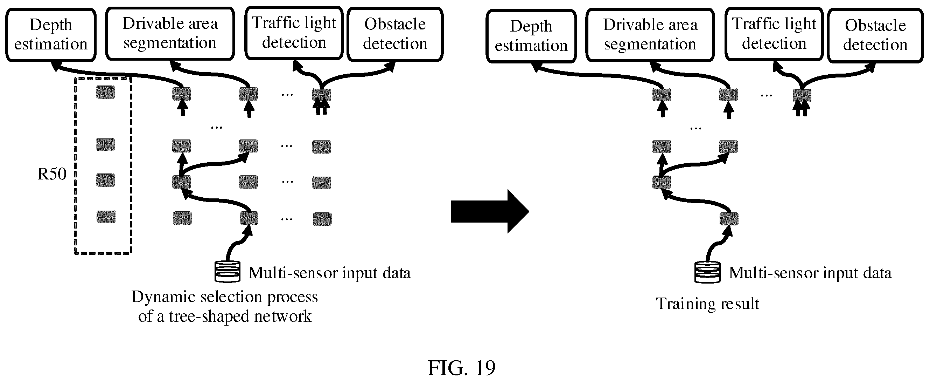

FIG. 19 shows a diagram of a process of obtaining a tree-shaped multi-task network by fine-tuning a target model obtained through training according to an embodiment of this application.

Refer to the process of training the target model in Embodiment 1. As shown in FIG. 19, in a process of performing joint training of a plurality of tasks in parallel, a shared loss control parameter may be added to different basic unit layers of a dynamic network in a process of calculating a gradient of each training unit in step 606, to encourage task loss sharing between different tasks. For a specific training process of obtaining the tree-shaped multi-task network, refer to the implementation process of training the target model provided in Embodiment 1. Details are not described herein again.

Refer to FIG. 19. For a basic unit part of each layer at a lower layer (that is, closer to an input layer), a shared loss control parameter of each task should be larger, and each task is encouraged to select a corresponding basic unit from these layers to perform computing to share more losses. The task loss shared between the foregoing tasks may be an entropy loss, an L1 loss, or the like. Details are not described herein again.

Still refer to FIG. 19. Based on the loss shared between the tasks, a common basic unit may be more preferentially selected at a bottom layer (that is, closer to the input layer) of a path of each task in the joint training, to perform a common initial data operation of the tasks. In other words, a plurality of tasks share a lower-layer basic unit, and each task reuses computing of this part. Therefore, a large amount of computing workload can be saved.

The following describes, with reference to another Embodiment 5, a neural network model training method in embodiments of this application. In a process of training a target model, a knowledge graph is introduced to optimize a capability of a model to recognize and process cross-modal data.

**Embodiment 5**

This embodiment of this application provides a solution in which a knowledge graph is introduced in a process of training a target model, to fine-tune, by using a related text element feature in the knowledge graph, a shared loss control parameter used to fine-tune a model structure, to obtain a tree-shaped multi-task network solution.

The knowledge graph is a database that records entities and relationships between the entities. The relationship between the entities is generally stored in a form of a relationship diagram.

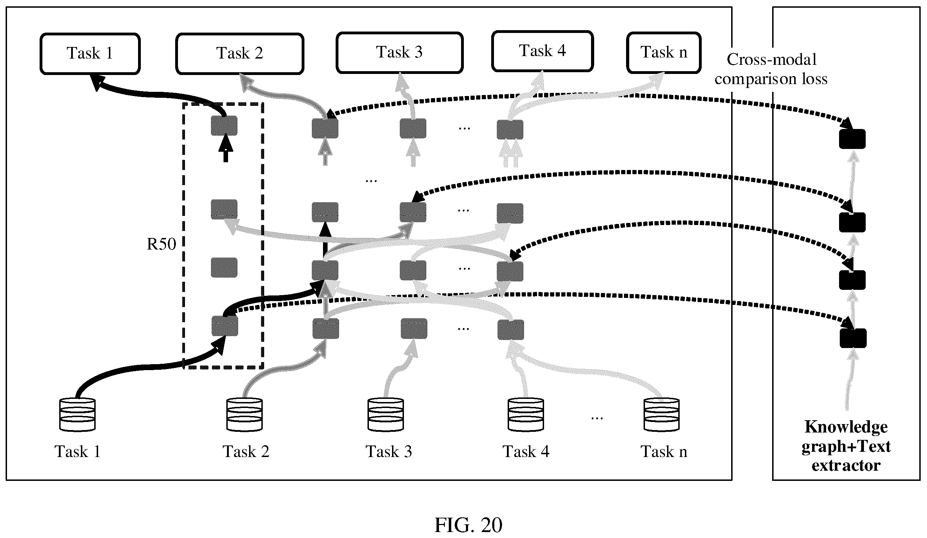

FIG. 20 shows a diagram of an application process of increasing explainability of basic units by using a knowledge graph in a target model training process according to an embodiment of this application.

As shown in FIG. 20, refer to the process of training the target model in Embodiment 1. In a process of performing joint training of a plurality of tasks in parallel, forward inference may be performed on the dynamic network in the process of performing step 606 to step 607, and an element feature of related data in the preset knowledge graph may be extracted by using a text extractor. Further, a cross-modal comparison loss is calculated between the extracted element feature and a corresponding feature extracted from the sampled data of the corresponding task by the dynamic network. Finally, the comparison loss obtained through calculation fine-tunes the gradient value that is obtained through calculation and that is of each training unitcomparison loss, to perform fine-tuning when step 607 is performed to adjust the related parameter of the path of each task and the model parameter based on the gradient average value.

It may be understood that data included in the knowledge graph shown in FIG. 20 may be, for example, image data. Correspondingly, the text extractor used in the knowledge graph shown in FIG. 20 may convert a part of image data in the knowledge graph into a text. In this way, the image data and the corresponding text data may be combined to form cross-modal data. For example, some subgraphs related to a cat in the knowledge graph may be converted, by using the text extractor, into a description statement like "a cat has four feet, one head, pointed ears...", further, a feature text related to the cat in the foregoing statement may be extracted by using a feature extractor of the text data.

It may be understood that the cross-modal data is generally in a form of a binary pair of <data_a, data_b>, for example, a binary pair like <image, text>. Generally, data that is of different modalities and that is of a same pair of data has a strong correlation, and data that is of different modalities and that is of different pairs has weak correlation.

In cross-modal data comparison training, it is assumed that there are n pairs of data <a1,b1>, <a2,b2>, ..., and <an,bn>, and a feature extractor specific to each modality is fa,fb. In a comparison process, a pair <ai,bi> with equal subscripts can be defined as a positive pair, and <ai,bj> (i≠j) can be defined as a negative pair. Further, in the comparison process, a comparison loss may be used to shorten a feature distance between ai and bi, and extend a feature distance between ai and bj (i is not equal to j).

Specifically, first, a cosine similarity between every two of data samples in different modalities may be calculated to obtain an n*n similarity matrix K, where $K[i,j]=cosine\_distance(fa(ai),fb(bj))$.

Further, based on the foregoing similarity obtained through calculation, a comparison loss of each sample ai relative to bj may be obtained through calculation by using the following formula (3):

$$-\log \frac{\exp(K[i,j])}{\sum_{t=1}^{n} \exp(K[i,t])} \quad (3)$$

An overall loss of a dataset a of a first modality may be obtained by accumulating comparison losses of n pieces of sample data ai of the first modality.

Similarly, an overall loss of a dataset b of a second modality is obtained through calculation based on the foregoing process. A cross-modal data training process may be a process of adjusting a path parameter of a task path of a training task, so that the overall loss of the dataset a and the overall loss of the dataset b gradually decrease. Details are not described herein again.

With reference to the calculation process of the foregoing comparison loss, it may be understood that when gradients are calculated for a plurality of training units that train tasks, comparison losses obtained through calculation based on corresponding training datasets may be first added to losses obtained through calculation based on a corresponding cross entropy loss function or the like by corresponding training tasks in the training units, and then losses obtained after addition of the corresponding tasks are used to calculate the gradients on the corresponding training units. In this way, in a training task process, a cross-modal comparison loss may be integrated to adjust a path parameter of the training task, to help synchronously train an operation capability like cross-modal data recognition or processing of a corresponding task. In cross-modal reconstruction, the feature text fa(ai) extracted based on the dataset a may be directly input into a simple neural network, to predict the feature text fb(bi) corresponding to the dataset b. Further, a cross-modal data reconstruction process may be completed based on reconstruction loss functions L2, L1, and the like. Details are not described herein again.

The knowledge graph solution is introduced, so that a joint training network of the target model obtained through training can learn structured knowledge information in the knowledge graph, and cross-modal feature association is formed between datasets of different modalities. This helps improve a cross-modal data processing capability of the model. In addition, explainability of each basic unit in the trained dynamic network may also be increased. The explainability refers to describing an internal structure of a system in a manner that can be understood by a human. In this embodiment of this application, this helps describe an internal structure of each basic unit in the dynamic network. Details are not described herein again.

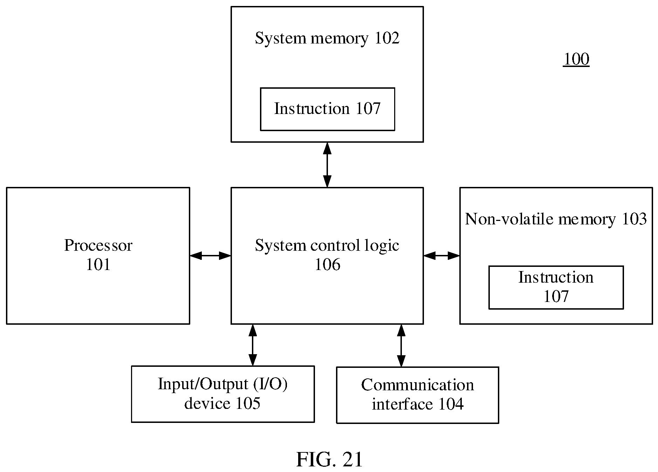

FIG. 21 is a diagram of a structure of a model training device 100 according to an embodiment of this application.

As shown in FIG. 21, the model training device 100 includes one or more processors 101, a system memory 102, a non-volatile memory (Non-Volatile Memory, NVM) 103, a communication interface 104, an input/output (I/O) device 105, and system control logic 106 used to be coupled to the processor 101, the system memory 102, the non-volatile memory 103, the communication interface 104, and the input/output (I/O) device 105. The processor 101 may include one or more processing units, for example, may include a central processing unit CPU (Central Processing Unit), a graphics processing unit GPU (Graphics Processing Unit), a digital signal processor DSP (Digital Signal Processor), and a micro-programmed control unit MCU (Micro-programmed Control Unit), an AI (Artificial Intelligence, Artificial Intelligence) processor, or a programmable logic device FPGA (Field Programmable Gate Array). A processing module or a processing circuit of a neural-network processing unit (Neural-network Processing Unit, NPU) or the like may include one or more single-core or multi-core processors. In some embodiments, the GPU may be configured to sample and train tasks in a process of training a target model.

The system memory 102 is a volatile memory, for example, a random access memory (Random-Access Memory, RAM) or a double data rate synchronous dynamic random access memory (Double Data Rate Synchronous Dynamic Random Access Memory, DDR SDRAM). The system memory is configured to temporarily store data and/or instructions. For example, in some embodiments, the system memory 102 may be configured to store a neural network model database obtained through training based on the solutions of this application, some other historical model databases, and the like.

The non-volatile memory 103 may include one or more tangible and non-transitory computer-readable media configured to store data and/or instructions. In some embodiments, the non-volatile memory 103 may include any suitable non-volatile memory like a flash memory and/or any suitable non-volatile storage device, for example, a hard disk drive (Hard Disk Drive, HDD), a compact disc (Compact Disc, CD), a digital versatile disc (Digital Versatile Disc, DVD), or a solid-state drive (Solid-State Drive, SSD). In some embodiments, the non-volatile memory 103 may also be a removable storage medium, for example, a secure digital (Secure Digital, SD) memory card. In some embodiments, the non-volatile memory 103 may be configured to store the neural network model database obtained through training based on the solutions of this application, some other historical model databases, and the like.

Specifically, the system memory 102 and the non-volatile memory 103 may respectively include a temporary copy and a permanent copy of an instruction 107. The instruction 107 may include: when being executed by at least one of the processors 101, enabling the model training device 100 to implement the neural network model training method provided in embodiments of this application.

The communication interface 104 may include a transceiver, configured to provide a wired or wireless communication interface for the model training device 100, to communicate with any other suitable device through one or more networks. In some embodiments, the communication interface 104 may be integrated into another component of the model training device 100. For example, the communication interface 104 may be integrated into the processor 101. In some embodiments, the model training device 100 may communicate with another device through the communication interface 104. For example, the model training device 100 may transmit, through the communication interface 104, a trained neural network model to an electronic device that needs to use the model, for example, an unmanned driving device or a medical image detection device. When the model training device 100 is a server cluster, communication between servers in the cluster may also be implemented by using the communication interface 104. This is not limited herein.

The input/output (I/O) device 105 may be an input device like a keyboard or a mouse, and an output device may be a display or the like. A user may interact with the model training device 100 by using the input/output (I/O) device 105, for example, input a to-be-trained task set or a dataset corresponding to a to-be-trained task.

The system control logic 106 may include any suitable interface controller, to provide any suitable interface for another module of the model training device 100. For example, in some embodiments, the system control logic 106 may include one or more memory controllers to provide interfaces to the system memory 102 and the non-volatile memory 103. In some embodiments, at least one of the processors 101 may be encapsulated together with logic of one or more controllers used for the system control logic 106 to form a system in package (System in Package, SiP). In some other embodiments, at least one of the processors 101 may be further integrated on a same chip with logic of one or more controllers used for the system control logic 106, to form a system-on-chip (System-on-Chip, SoC).

It may be understood that the structure of the model training device 100 shown in FIG. 21 is merely an example. In some other embodiments, the model training device 100 may include more or fewer components than those shown in the figure, or combine some components, or split some components, or have different component arrangements. The components shown in the figure may be implemented by hardware, software, or a combination of software and hardware.

The use of "one embodiment" or "an embodiment" in the specification means that particular features, structures, or characteristics described with reference to the embodiment are included in at least one example implementation solution or technology disclosed according to embodiments of this application. The phrase "in one embodiment" appearing in various places in the specification does not necessarily all mean a same embodiment.

The disclosure of embodiments of this application further relates to an apparatus for performing operations in the text. The apparatus may be constructed dedicatedly for the required purpose or may include a general-purpose computer that is selectively activated or reconfigured by a computer program stored in the computer. Such a computer program may be stored on a computer-readable medium, for example, but is not limited to any type of disk, including a floppy disk, a compact disc, a CD-ROM, a magneto-optical disk, a read-only memory (ROM), a random access memory (RAM), an EPROM, an EEPROM, a magnetic or optical card, an application-specific integrated circuit (ASIC), and any type of medium suitable for storing electronic instructions. In addition, each of them may be coupled to a computer system bus. In addition, the computer mentioned in the specification may include a single processor or may be an architecture using a plurality of processors for increased computing capabilities.

In addition, the language used in the specification is already mainly selected for readability and instructional purposes and may not be selected to depict or limit the disclosed topics. Therefore, the disclosure of embodiments of this application is intended to describe but not to limit the scope of the concepts discussed in the specification.

## Claims

1. A neural network model training method, comprising:

   constructing a first neural network architecture, wherein the first neural network architecture comprises M basic unit layers, each of the M basic unit layers comprises a plurality of basic units, and the plurality of basic units comprise at least a first-type basic unit and a second-type basic unit, wherein
   both the first-type basic unit and the second-type basic unit are configured to provide computing capabilities, the first-type basic unit has an adjustable computing parameter, the second-type basic unit has a trained historical computing parameter, and the second-type basic unit is obtained based on a trained historical model; and
   obtaining a target model through training based on datasets respectively corresponding to a plurality of tasks and the first neural network architecture, wherein the target model comprises a plurality of task paths, the plurality of task paths are in a one-to-one correspondence with the plurality of tasks, at least some of the plurality of task paths comprise N basic units, the N basic units are selected from some of the M basic unit layers, each of the N basic units corresponds to a different basic unit layer, and N<M.

2. The method according to claim 1, wherein K basic unit layers of the M basic unit layers comprise a third-type basic unit, wherein K≤M; and
   the third-type basic unit is configured to provide a computing capability for a newly-added task other than the plurality of tasks, and the third-type basic unit has an adjustable computing parameter.

3. The method according to claim 1, wherein the obtaining a target model through training based on datasets respectively corresponding to a plurality of tasks and the first neural network architecture comprises:

   training, in parallel based on the datasets respectively corresponding to the plurality of tasks, the task paths respectively corresponding to the plurality of tasks;
   adjusting, based on a training result, path parameters of the task paths respectively corresponding to the plurality of tasks, wherein the path parameters comprise probability parameters respectively corresponding to the N basic units selected from the M basic unit layers and a computing parameter of the first-type basic unit of the selected N basic units; and
   determining that the adjusted path parameters of the task paths respectively corresponding to the plurality of tasks meet a convergence condition, and completing training of the target model.

4. The method according to claim 3, wherein the training, in parallel based on the datasets respectively corresponding to the plurality of tasks, the task paths respectively corresponding to the plurality of tasks comprises:

separately selecting, by using a plurality of processors, one task from the plurality of tasks, and obtaining training sample data corresponding to each selected task, wherein a process in which a first processor of the plurality of processors selects a first task of the plurality of tasks for training is related to a computing capability of the first processor and complexity of the first task, and the training sample data is sample data selected from the datasets respectively corresponding to the plurality of tasks; and

training, in parallel by using the plurality of processors and based on the training sample data, task paths corresponding to selected tasks.

5. The method according to claim 3 or 4, wherein the constructing a first neural network architecture comprises:
constructing the first neural network architecture based on a configuration file, wherein the configuration file comprises initial values of the path parameters respectively corresponding to the plurality of tasks, and the initial value of the path parameter comprises an initial value of the probability parameter and an initialization computing parameter of the first-type basic unit.

6. The method according to claim 5, wherein the adjusting, based on a training result, path parameters of the task paths respectively corresponding to the plurality of tasks comprises:
adjusting the initial values of the path parameters of the task paths respectively corresponding to the plurality of tasks to training values by using a first loss function, wherein the first loss function comprises a constraint determined based on an output result corresponding to each task path.

7. The method according to claim 6, wherein the adjusting the initial values of the path parameters of the task paths respectively corresponding to the plurality of tasks to training values by using a first loss function comprises:

calculating, by using the first loss function, gradients respectively corresponding to the plurality of processors, wherein the gradients indicate adjustment directions of corresponding path parameters on the corresponding processors; calculating an average value of the gradients respectively corresponding to the plurality of processors, to obtain a first average gradient; and adjusting, based on the first average gradient, the initial values of the path parameters respectively corresponding to the plurality of tasks to the training values.

8. The method according to claim 6 or 7, the adjusting the initial values of the path parameters of the task paths respectively corresponding to the plurality of tasks to training values comprises:

adjusting the initial value of the probability parameter to a trained probability value; and adjusting the initialization computing parameter of the first-type basic unit to a trained computing parameter.

9. The method according to claim 5, wherein the training, in parallel by using the plurality of processors and based on the training sample data, task paths of selected tasks comprises:

determining, in parallel based on the initial values of the path parameters and by using the plurality of processors, initialization paths respectively corresponding to the plurality of tasks; and performing, based on the training sample data, at least one time of iterative training on the initialization path respectively corresponding to each task, wherein a first time of iterative training in the at least one time of iterative training comprises: executing, by using the plurality of processors, the corresponding initialization paths to perform operations on input training sample data in parallel, to obtain initialization path output results respectively corresponding to the plurality of tasks.

10. The method according to any one of claims 3 to 9, wherein a type of the plurality of tasks comprises at least one of a classification task, a segmentation task, a detection task, a translation task, a recognition task, a generation task, or a regression task; and the datasets respectively corresponding to the plurality of tasks comprise a first dataset of a first type and a second dataset of a second type, and there is an association correspondence between all data in the first dataset and all data in the second dataset.

11. The method according to claim 10, wherein the adjusting, based on a training result, path parameters of the task paths respectively corresponding to the plurality of tasks comprises:
adjusting the initial values of the path parameters of the task paths respectively corresponding to the plurality of tasks to the training values by using the first loss function and a second loss function, wherein the second loss function comprises a constraint determined based on the association correspondence.

12. The method according to claim 11, wherein the adjusting the initial values of the path parameters of the task paths respectively corresponding to the plurality of tasks to the training values by using the first loss function and a second loss function comprises:

calculating a similarity between all the data in the first dataset and all the data in the second dataset, to obtain a similarity matrix;

calculating, based on the similarity matrix and by using the second loss function, a comparison loss between the first dataset and the second dataset, wherein the comparison loss comprises a sum of loss function values corresponding to all data in the first dataset, and/or a sum of loss function values corresponding to all data in the second dataset;

calculating, based on the comparison loss and by using the first loss function, gradients respectively corresponding to the plurality of processors, and calculating an average value of the gradients respectively corresponding to the plurality of processors, to obtain a second average gradient; and

adjusting, based on the second average gradient, the initial values of the path parameters of the task paths respectively corresponding to the plurality of tasks to the training values.

13. The method according to claim 2, wherein after the obtaining a target model through training based on datasets respectively corresponding to a plurality of tasks and the first neural network architecture, the method further comprises:

determining, based on the task paths that respectively correspond to the plurality of trained tasks and that are in the target model, historical path parameters corresponding to the task paths; and

training, based on the historical path parameter and an initialization computing parameter of the third-type basic unit and by using a dataset corresponding to the newly-added task, a newly-added path of the newly-added task, wherein the newly-added path comprises the third-type basic unit.

14. The method according to claim 13, wherein the plurality of trained tasks comprise at least one second task, and the training a newly-added path of the newly-added task by using a dataset corresponding to the newly-added task comprises:

separately selecting, by using the plurality of processors, one task from the newly-added task and the at least one second task, and obtaining training sample data corresponding to each selected task, wherein at least one processor that selects the newly-added task selects the training sample data from the dataset corresponding to the newly-added task, and a processor that selects the second task selects the training sample data from a dataset corresponding to the second task; and

training, in parallel based on the obtained training sample data and by the at least one processor that selects the newly-added task, the newly-added task, and executing, in parallel by the processor that selects the second task, a task path corresponding to the second task, to facilitate training of the newly-added task.

15. The method according to claim 14, wherein the training, in parallel based on the obtained training sample data and by the at least one processor that selects the newly-added task, the newly-added task, and executing, in parallel by the processor that selects the second task, a trained task path corresponding to the second task, to facilitate training of the newly-added task comprises:

calculating, by using a first loss function, a first gradient respectively corresponding to the at least one processor that selects the newly-added task, and calculating a second gradient corresponding to the processor that selects the second task;

calculating an average value of gradients based on the first gradient and the second gradient, to obtain a third average gradient; and

adjusting, based on the third average gradient, a path parameter corresponding to the newly-added task to a training value.

16. The method according to claim 15, wherein the adjusting, based on the third average gradient, a path parameter corresponding to the newly-added task to a training value comprises:
adjusting an initial value of the path parameter corresponding to the newly-added task to the training value, and iterating the training value of the path parameter corresponding to the newly-added task, wherein the adjusting an initial value of the path parameter corresponding to the newly-added task to the training value comprises:
adjusting an initial value of a probability parameter of each basic unit comprised in the newly-added path to the training value, and adjusting the initialization computing parameter of the third-type basic unit comprised in the newly-added path to a trained computing parameter.

17. A neural network model-based task operation method, comprising:

obtaining a plurality of input tasks;

performing an operation on the plurality of input tasks based on a plurality of task execution paths in the neural network model, wherein at least some of the plurality of task paths comprise N basic units, the N basic units correspond to N basic unit layers of the neural network model, the neural network model comprises M basic unit layers in total, and the N basic unit layers are parts of the M basic unit layers, wherein

each of the M basic unit layers comprises a plurality of basic units, and the plurality of basic units comprise at least a first-type basic unit and a second-type basic unit, both the first-type basic unit and the second-type basic unit are configured to provide computing capabilities, the first-type basic unit has an adjustable computing parameter, the second-type basic unit has a trained historical computing parameter, and the second-type basic unit is obtained based on a trained historical model; and

outputting a plurality of operation results, wherein the plurality of operation results are in a one-to-one correspondence with the plurality of input tasks.

18. The method according to claim 17, wherein K basic unit layers of the M basic unit layers comprise a third-type basic unit, wherein K≤M, and the method comprises:

obtaining the plurality of input tasks and a newly-added input task; and

performing an operation on the plurality of input tasks and the newly-added input task based on the plurality of task paths in the neural network model, wherein the plurality of task paths comprise a newly-added task path corresponding to the newly-added input task, the newly-added task path comprises L third-type basic units, the L third-type basic units are selected from the K basic unit layers, and L≤K, wherein each of the L third-type basic units corresponds to a different basic unit layer, the third-type basic unit is configured to provide a computing capability for the newly-added input task, and the third-type basic unit has an adjustable computing parameter.

19. The method according to claim 18, wherein a process of adding the newly-added task path to the plurality of task paths comprises:
training a task path corresponding to at least one of the plurality of input tasks and the newly-added task path in parallel, to enable a neural network model obtained through training to comprise the newly-added task path, and the newly-added task path and task paths respectively corresponding to the plurality of input tasks jointly consist of the plurality of task paths.

20. The method according to any one of claims 17 to 19, wherein a type of the plurality of input tasks comprises at least one of a classification task, a segmentation task, a detection task, a translation task, a recognition task, a generation task, or a regression task.

21. An electronic device, comprising one or more processors and one or more memories, wherein the one or more memories store one or more programs, and when the one or more programs are executed by the one or more processors, the electronic device is enabled to perform the neural network model training method according to any one of claims 1 to 16, or the electronic device is enabled to perform the task operation method according to any one of claims 17 to 20.

22. A cloud server, comprising a communication interface and a processor coupled to the communication interface, wherein
the processor is configured to:

receive a plurality of tasks input by one or more terminals;

input the plurality of tasks into a neural network architecture to perform the neural network model training method according to any one of claims 1 to 16, to obtain a target model through training; and

send an obtaining parameter of the target model obtained through training to the one or more terminals, wherein the target model comprises a plurality of task paths, and the plurality of task paths are in a one-to-one correspondence with the plurality of tasks.

23. A cloud server, comprising a communication interface and a processor coupled to the communication interface, wherein
the processor is configured to:

receive a plurality of tasks input by one or more terminals;

input the plurality of tasks into a neural network model;

perform an operation on the plurality of input tasks based on a plurality of task paths in the neural network model, wherein at least some of the plurality of task paths comprise N basic units, the N basic units correspond to N basic unit layers of the neural network model, the neural network model comprises M basic unit layers in total, and the N basic unit layers are parts of the M basic unit layers; and

each of the M basic unit layers comprises a plurality of basic units, and the plurality of basic units comprise at least a first-type basic unit and a second-type basic unit, both the first-type basic unit and the second-type basic unit are configured to provide computing capabilities, the first-type basic unit has an adjustable computing parameter, the second-type basic unit has a trained historical computing parameter, and the second-type basic unit is obtained based on a trained historical model; and

outputting a plurality of operation results, and sending the plurality of operation results to the one or more terminals, wherein the plurality of operation results are in a one-to-one correspondence with the plurality of input tasks.

24. A computing device cluster, comprising at least one computing device, wherein each computing device comprises a processor and a memory; and
the processor of the at least one computing device is configured to execute instructions stored in the memory of the at least one computing device, so that the computing device cluster performs the neural network model training method according to any one of claims 1 to 16, or performs the task operation method according to any one of claims 17 to 20.

25. A computer-readable storage medium, wherein the storage medium stores instructions, and when the instructions are executed on a terminal, a cloud server, a computing device cluster, or a processor, the terminal, the cloud server, the computing device cluster, or the processor performs the neural network model training method according to any one of claims 1 to 16, or performs the task operation method according to any one of claims 17 to 20.

26. A computer program product, comprising a computer program/instructions, wherein when the computer program/instructions is/are executed by a terminal, a cloud server, a computing device cluster, or a processor, the terminal, the cloud server, the computing device cluster, or the processor performs the neural network model training method according to any one of claims 1 to 16, or performs the task operation method according to any one of claims 17 to 20.

Multi-task learning: a plurality of different tasks are trained together

FIG. 1a

FIG. 1b

FIG. 2

EP 4 560 529 A1

EP 4 560 529 A1

```
311   Obtain a first modal dataset used          Obtain the first modal dataset           Obtain the first modal dataset
      to train a task 1                           used to train a task 2                   used to train a task n

312   Input a model, and complete uni-           Input the model, and complete            Input the model, and complete
      modal training of the task 1                uni-modal training of the task 2         uni-modal training of the task n

313   Input an association relationship          Input an association relationship         Input an association relationship
      between data that is of different          between data that is of different         between data that is of different
      modalities and that is used to             modalities and that is used to train      modalities and that is used to train
      train the task 1 into the model, to        the task 2 into the model, to train       the task n into the model, to train
      train the task 1                            the task 2                               the task n

314   Complete cross-modal training of           Complete cross-modal training of          Complete cross-modal training of
      the task 1                                  the task 2                               the task n

                                                           ...
```

FIG. 3a

321 Obtain a task set including tasks 1 to n, and construct a
dynamic network of a target model

322 Input a dataset corresponding to each task in the task set into
the constructed dynamic network to perform multi-task joint
training, to complete training of the tasks 1 to n

FIG. 3b

FIG. 4

Initialization phase

Classification: ImageNet22K

Detection: MS-COCO, Objects365, Open Images, and LVIS

Segmentation: VOC2012, ADE20K, and COCO-Stuff

**Step 1:**
Prepare single-task data and copy the data to a server cluster

**Step 2:** Initialize a multi-task training configuration
1. Initialize a structure and a parameter of a dynamic network
2. Initialize a task weight (a selection parameter)

Task 1    Task 2    Task 3    Task 4    Task n

R50

Task 1    Task 2    Task 3    Task 4    Task n

Training phase

**Differentiable path sampling**

Task 2        Task 1

Task 2        Task 1

GPU 0        GPU 1    ...

**Step 4:**
The dynamic network samples a group of paths based on the probability parameter, and the sampled paths are gradually converged to a final path solution in a training process

**BN synchronization**

**Step 5:**
Infer a model based on the sampled paths and calculate a gradient of a current GPU

**Step 6:**
Calculate an average value of GPU gradients, and update, based on the average gradient, a selection parameter corresponding to each task and a model parameter

Repeat step 3 to step 6 until the model converges

**Task and data sampling**

Data sampling

Task sampling

Task 2    Task 1    ...    Task 2

GPU 0    GPU 1    ...    GPU 8

**Step 3:**
Sample one task on each GPU to ensure diversity of current batch tasks, and perform corresponding data sampling based on the tasks

...

**One iteration and multi-task concurrency**

**Output:** Dynamic pre-trained model (Complete path selection and parameter update)

Task 1    Task 2    Task 3    Task 4    Task n

R50

Task 1    Task 2    Task 3    Task 4    Task n

FIG. 5

EP 4 560 529 A1

601 — Obtain a task set that participates in current training

602 — Construct a dynamic network of a target model based on the obtained task set and a predefined neural network architecture

603 — Initialize a configuration environment for a plurality of tasks based on the constructed dynamic network

604 — Separately perform task sampling on each task in the task set by using a plurality of training units, and perform concurrent data sampling of a plurality of tasks on datasets corresponding to the tasks

605 — Respectively sample an initialization path for each task based on a preset probability parameter

606 — Infer a model based on the sampled path and calculate gradients of the training units and a gradient average value

607 — Update, based on the gradient average value obtained through calculation, a path parameter corresponding to each task and a model parameter

608 — Determine whether a model training convergence condition is met — No

Yes

609 — Complete a training process of the plurality of tasks, and end model training to obtain the target model

FIG. 6

FIG. 7

Target
detection

MS-COCO

Training

$w_1$ | $w_2$ | $w_3$ | ... | $w_N$

Probability
sampling

$p_1$ | $p_2$ | $p_3$ | ... | $p_N$

Inference

$p_1$ | $p_2$ | $p_3$ | ... | $p_N$

MS-COCO

Mode 1: Soft training mode

Temperature parameter $\lambda$: used to control a degree to which $w_i$ deviates from $p_i$

The temperature parameter $\lambda$ gradually decreases during training, for example, decreases from 5 to 0.01. When $\lambda$ approaches 0, discrete sampling may be fully approximated

$p_1$ | $p_2$ | $p_3$ | ... | $p_N$    $G_1$ | $G_2$ | $G_3$ | ... | $G_N$

$\lambda$    $G_i = -log(-log U_i)$

$$w_i^{soft} = \frac{exp\,(p_i - log\,(-log\,U_i)/\lambda)}{\sum_k exp\,(p_i - log\,(-log\,U_k)/\lambda)}$$

Mode 2: Hard training mode

Use a hard sample trick to convert a weight to a discrete form of 0 and 1

$$w_i^{hard} = stop\_grad(w_i^{soft}) + w_i^{soft}$$

FIG. 8

| Method | #param. | Coco-box AP | Coco-mask AP | LVIS-box AP | LVIS-mask AP | VOC2012 | Ade20k | Objects365 | Open Images |
|---|---|---|---|---|---|---|---|---|---|
| Single-task training | 46 M | 46.83 | 41.97 | 27.07 | 26.02 | 76.35 | 42.05 | 23.99 | 52.44 |
| This solution | 46 M | **49.73** | **44.47** | **33.95** | **32.05** | **82.23** | **45.31** | **26.61** | 57.73 |

FIG. 9

FIG. 10

EP 4 560 529 A1

(a) Pre-training is not used

(b) Pre-trained model is used

FIG. 11

EP 4 560 529 A1

1201
Obtain a to-be-trained newly-added task and a corresponding dataset

1202
Obtain a structure configuration file of a trained model and a related model parameter after training

1203
Initialize, based on the obtained model, a configuration environment for training the newly-added task

1204
Sample the newly-added task by using a plurality of training units, and perform data sampling on a dataset corresponding to the newly-added task

1205
The training units separately sample a group of initialization paths for the newly-added task

1206
The training units infer a model based on the sampled path and calculate gradients of the training units and a gradient average value

1207
Update, based on the gradient average value obtained through calculation, a path parameter corresponding to each task and a model parameter

1208
Determine whether a training convergence condition of the newly-added task is met

No

Yes

1209
Complete training of the newly-added task

FIG. 12

| Method (Pretrain) | #param. | RMSE ↓ |
|---|---|---|
| Pretrained ImageNet | 23.5 M+26.1 M | 2.78 |
| Pretrained Coco | 23.5 M+26.1 M | 2.577 |
| CNN SOTA | 58 M+15 M | 2.446 |
| Newly-added task | 23.5 M+26.1 M | **2.24** |

FIG. 13a

| Detection tasks including datasets of a plurality of different styles and classifications | | | | | | | | | | |
|---|---|---|---|---|---|---|---|---|---|---|
| Model/ Method | KITTI | VOC | WiderFace | LISA | Kitchen | DOTA | DeepLesion | Comic | Clipart | Watercolor |
| Single-task sota | 67.1 | 81.5 | 62.1 | 90 | 89.5 | 68.3 | 57.4 | 45.5 | 31.2 | 53.4 |
| DA | 68 | 82.4 | 51.3 | 87.6 | 90 | 56.3 | 53.4 | 53.4 | 55.8 | 60.6 |
| COCO | 70.2 | 84.2 | 61.4 | 88.6 | 88.7 | 64.7 | 52.4 | 51.6 | 56.9 | 56.1 |
| GAIA | 72.9 | 85.9 | 62.6 | 91.2 | 89.8 | 69.2 | 59.4 | 57 | 67.9 | 63.5 |
| GAIA-TSAS | 75.6 | 87.4 | 62.7 | 92.1 | 90.1 | 70.8 | 62.1 | 61.1 | 72.2 | 69.7 |
| Newly-added task | **73.8** | **87.0** | **67.3** | **96.2** | **96.0** | **71.7** | **62.4** | **61.6** | **72.0** | **67.5** |

FIG. 13b

EP 4 560 529 A1

**DyJointTraining procedure**

**DyFinetune procedure**

FIG. 14

1501 — Obtain a newly-added dataset, and create a newly-added fake task corresponding to the newly-added dataset

1502 — Obtain a structure configuration file of a trained model and a related model parameter after training

1503 — Initialize, based on the obtained model, a configuration environment for jointly training a target task and the newly-added fake task

1504 — Sample the target task and the newly-added fake task by using a plurality of training units, and perform data sampling on the newly-added dataset

1505 — Sample a trained optimal path for the target task, and sample an initialization path for the newly-added fake task

1506 — The training units infer a model based on the sampled paths and calculate gradients of the training units and a gradient average value

1507 — Update, based on the gradient average value obtained through calculation, a path parameter corresponding to each task and a model parameter

1508 — Determine whether a training convergence condition of the target task is met → No

Yes

1509 — Complete training the target task to learn a data feature in the newly-added dataset

FIG. 15

FakeData: artificial oblique parking spot data

| Image 1 | Image 2 | Image 3 | Image 4 | Image 5 |

45°     50°     60°     65°     75°

FIG. 16

| Model | Vertical and horizontal parking spots | | Oblique parking spot | |
|---|---|---|---|---|
| | Fscore | Angle recall | Fscore | Angle recall |
| Without using artificial data | 75.63% | 70.33% | 60.78% | 46.76% |
| This solution | 78.13%(↑2.5%) | 70.37%(↑0.04%) | 71.79%(↑11.01%) | 61.60%(↑14.84%) |

FIG. 17

EP 4 560 529 A1

Task 1　　Task 2　　Task 3　　Task 4　　Task n

R50

Task 1　　Task 2　　Task 3　　Task 4　　Task n

Dynamic selection process of a non-tree-shaped network

FIG. 18

Depth estimation | Drivable area segmentation | Traffic light detection | Obstacle detection

R50

Multi-sensor input data

Dynamic selection process
of a tree-shaped network

Depth estimation | Drivable area segmentation | Traffic light detection | Obstacle detection

Multi-sensor input data

Training result

FIG. 19

EP 4 560 529 A1

FIG. 20

System memory 102

Instruction 107

100

| Processor 101 | System control logic 106 | Non-volatile memory 103 |
|---|---|---|
| | | Instruction 107 |

Input/Output (I/O) device 105

Communication interface 104

FIG. 21

## INTERNATIONAL SEARCH REPORT

| International application No. |
|---|
| **PCT/CN2023/087075** |

| | |
|---|---|
| **A. CLASSIFICATION OF SUBJECT MATTER** | |

G06N3/04(2023.01)i;  G06N3/08(2023.01)i

According to International Patent Classification (IPC) or to both national classification and IPC

| | |
|---|---|
| **B. FIELDS SEARCHED** | |

Minimum documentation searched (classification system followed by classification symbols)

IPC:  G06N;  G06F

Documentation searched other than minimum documentation to the extent that such documents are included in the fields searched

Electronic data base consulted during the international search (name of data base and, where practicable, search terms used)

CNKI, CNTXT, USTXT, EPTXT, VEN, IEEE: 神经网络, 模型, 训练, 基础单元, 路径, 调整, 多, neural network, model, training, base units, pathway, adjustment, multi

| | |
|---|---|
| **C. DOCUMENTS CONSIDERED TO BE RELEVANT** | |

| Category* | Citation of document, with indication, where appropriate, of the relevant passages | Relevant to claim No. |
|---|---|---|
| A | CN 111612134 A (DINGFU INTELLIGENT TECHNOLOGY CO., LTD.) 01 September 2020 (2020-09-01) description, paragraphs [0034]-[0085], and figures 1-3 | 1-26 |
| A | CN 109993301 A (CAMBRICON TECHNOLOGIES CO., LTD.) 09 July 2019 (2019-07-09) entire document | 1-26 |
| A | CN 109978141 A (TENCENT TECHNOLOGY (SHENZHEN) CO., LTD.) 05 July 2019 (2019-07-05) entire document | 1-26 |
| A | US 2020410365 A1 (GOOGLE L.L.C.) 31 December 2020 (2020-12-31) entire document | 1-26 |
| A | WO 2022083536 A1 (HUAWEI TECHNOLOGIES CO., LTD.) 28 April 2022 (2022-04-28) entire document | 1-26 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 June 2023** | **21 June 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/087075**

| Patent document cited in search report | | | Publication date (day/month/year) | Patent family member(s) | | | Publication date (day/month/year) |
|---|---|---|---|---|---|---|---|
| CN | 111612134 | A | 01 September 2020 | None | | | |
| CN | 109993301 | A | 09 July 2019 | None | | | |
| CN | 109978141 | A | 05 July 2019 | None | | | |
| US | 2020410365 | A1 | 31 December 2020 | WO | 2019165462 | A1 | 29 August 2019 |
| WO | 2022083536 | A1 | 28 April 2022 | CN | 112418392 | A | 26 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210864203X